# FASCICULE DE BREVET EUROPEEN

(11) **EP 4 085 283 B1**
(45) Date de publication et mention de la délivrance du brevet: **04.11.2026**
(21) Numéro de dépôt: 20851226.9
(22) Date de dépôt: 23.12.2020
(51) Int. Cl.: G02B 5/20, B32B 3/26, B32B 17/10, B60J 1/00, G01S 17/00, C03C 4/10

(54) **VITRAGE FEUILLETÉ DE VÉHICULE ET DISPOSITIF AVEC SYSTÈME DE VISION PROCHE INFRAROUGE ASSOCIÉ ET SA FABRICATION**
LAMINIERTE FAHRZEUGVERGLASUNG UND VORRICHTUNG, DIE EIN ZUGEHÖRIGES NAHINFRAROTSICHTSYSTEM AUFWEIST, UND PRODUKTION DAVON
LAMINATED VEHICLE GLAZING AND DEVICE HAVING AN ASSOCIATED NEAR-INFRARED VISION SYSTEM AND PRODUCTION THEREOF

(30) Priorité: 03.01.2020 FR 2000023
(43) Date de publication de la demande: 09.11.2022
(73) Titulaire: Saint-Gobain Sekurit France, 60150 Thourotte (FR)
(72) Inventeur: DAVIS, Claire, 60200 COMPIEGNE (FR); YAVARI, Keihann, 60280 MARGNY-LES-COMPIEGNE (FR)
(74) Mandataire: Saint-Gobain Recherche
(86) Numéro de dépôt international: PCT/FR2020/052615
(87) Numéro de publication internationale: WO 2021/136908

(56) Documents cités:
- WO-A1-2018/142078
- WO-A1-2018/178286
- WO-A1-2018/178883
- WO-A1-2019/150038
- SCHOTT ET AL: "Ultra-Thin SCHOTT AS 87 eco Aluminosilicate Glass", CA, 18 November 2020 (2020-11-18), pages 622 - 7472, XP055752220, Retrieved from the Internet <URL:https://abrisatechnologies.com/wp-content/uploads/2017/05/Ultra-Thin-SCHOTT-AS-87-eco-Aluminosilicate-Glass.pdf> [retrieved on 20201119]
- ANONYMOUS: "Trosifol - World of Interlayers: Special PVB film admits ultraviolet light unfiltered", 2 April 2013 (2013-04-02), XP055751446, Retrieved from the Internet <URL:https://www.trosifol.com/news/detail-view/news/special-pvb-film-admits-ultraviolet-light-unfiltered/> [retrieved on 20201117]

## Description

L'invention se rapporte à un vitrage feuilleté, en particulier un pare-brise, dans un véhicule notamment routier, de train en association avec un système de vision dans le proche infrarouge. L'invention décrit également un dispositif combinant ledit vitrage et le système de vision proche infrarouge ainsi que le procédé de fabrication du vitrage feuilleté
Les vitrages pour véhicules autonomes et la technologie associée évoluent constamment, notamment pour améliorer la sécurité.

La télédétection par laser ou LIDAR, acronyme de l'expression en langue anglaise « light detection and ranging » ou « laser detection and ranging » (soit en français « détection et estimation de la distance par la lumière » ou « par laser ») est utilisée dans des véhicules au niveau des phares ou du toit.

Plus récemment la demande de brevet WO20180153012 propose de placer un LIDAR fonctionnant dans le proche infrarouge entre 750nm et 1050nm derrière le pare-brise feuilleté comportant deux feuilles de verre extraclair et un filtre infrarouge éliminé dans la zone vue par le LIDAR.

Le document WO2018178883A1 représente l'art antérieur.

Les performances de ce dispositif (vitrage associé au LIDAR) peuvent être améliorées. Plus précisément, la présente invention se rapporte à un vitrage feuilleté (et de préférence bombé) de véhicule notamment routier (voiture, camion, transport en commun : bus, car etc) ou ferroviaire (en particulier à vitesse maximale d'au plus 90km/h ou d'au plus 70km/h, en particulier les métros, tramway), en particulier un pare-brise, ou encore une lunette arrière, voire un vitrage latéral, d'épaisseur E1 donnée par exemple subcentimétrique notamment d'au plus 5mm pour un pare-brise de véhicule routier, en particulier voiture, vitrage comportant :
- une première feuille de verre, notamment bombée, destinée à être le vitrage extérieur, avec une première face principale externe F1 et une deuxième face principale interne F2 (orientée vers l'habitacle), si véhicule automobile d'épaisseur de préférence d'au plus 4mm, et même d'au plus 3mm ou 2,5mm, - notamment 2,1mm, 1,9mm, 1,8mm, 1,6mm et 1,4mm - et de préférence d'au moins 0,7mm ou 1mm
- un intercalaire de feuilletage (mono ou multifeuillet), éventuellement neutre, clair, extraclair ou teinté notamment gris ou vert, en matière polymère de préférence thermoplastique et mieux encore en polyvinylbutyral (PVB), de préférence si véhicule routier d'épaisseur E3 d'au plus 1,8mm, mieux d'au plus 1,2mm et même d'au plus 0,9mm (et mieux d'au moins 0,3mm et même d'au moins 0,6mm), l'intercalaire de feuilletage étant éventuellement acoustique et/ou ayant éventuellement une section transversale diminuant en forme en coin du haut vers le bas du vitrage feuilleté (en particulier un parebrise) notamment pour un affichage tête haute (HUD pour Head Up Display en anglais), intercalaire de feuilletage avec une face principale FA orientée vers F2 et avec une face principale FB opposée à FA
- une deuxième feuille de verre ou plastique destinée à être le vitrage intérieur, de préférence bombée et en particulier teintée, avec une troisième face principale F3 côté F2 et une quatrième face principale interne F4 (orientée vers l'habitacle), si véhicule routier d'épaisseur E2 de préférence inférieure à celle du premier vitrage, dans le cas du verre, même d'au plus 3mm ou 2,5mm - notamment 1,9mm, 1,8mm, 1,6mm et 1,4mm - ou même d'au plus 1,3mm, et de préférence d'au moins 0,7mm, l'épaisseur des première et deuxième feuilles étant de préférence strictement inférieure à 5 ou 4mm, même à 3,7mm.

Selon l'invention la première feuille de verre présente une teneur pondérale en oxyde de fer total d'au plus 0,05%.

Notamment la deuxième feuille de verre ou plastique est susceptible d'absorber (significativement) dans le proche infrarouge par exemple la deuxième feuille est en verre et présente une teneur pondérale en oxyde de fer total d'au moins 0,4%.

Aussi, la deuxième feuille (de verre ou plastique) présente un trou traversant dans l'épaisseur notamment de largeur W1 au moins centimétrique et de préférence d'au plus 25cm ou mieux d'au plus 15cm, encore mieux d'au plus 10cm pour une meilleure tenue mécanique, notamment de section trapézoïdale ou rectangulaire, ou circulaire. Sous ledit trou traversant, du côté de la face F2, le vitrage comporte un élément de sécurité transparent à au moins une longueur d'onde dite de travail dans l'infrarouge dans une gamme allant de 800nm à 1800nm, notamment 850±5nm et/ou 905±5nm et/ou 1550±5nm.

En face dudit trou traversant, le vitrage feuilleté (au moins l'ensemble comprenant la première feuille de verre, ledit élément de sécurité avec éventuellement l'intercalaire de feuilletage,) présente une transmission totale d'au moins 80,0%, 90,0%, ou 95,0% à la longueur d'onde de travail, notamment mesurée à 90° ou même de préférence aussi à 60° ou même jusqu'à 60° par rapport au plan (local) de la première feuille par exemple côté face F2 (habitacle) et/ou côté face F1.

L'élément de sécurité comporte, en configuration a), un premier film polymère ou un premier empilement de film(s) polymère comportant un premier film polymère et au moins un deuxième film polymère collé au premier film, d'épaisseur totale de film(s) polymère E'3 d'au moins 50µm et de préférence d'au plus 800µm, 600µm, 500µm (et/ou notamment inférieure ou égale à E3 et même épaisseur totale de a) inférieure ou égale à E3), le premier film étant collé à la face F2 nue ou revêtue d'un revêtement fonctionnel (filtre sélectif et/ou couche chauffante etc, donc premier film collé sur le revêtement fonctionnel), l'intercalaire de feuilletage (mono ou multifeuillet) présentant un trou traversant dit trou intercalaire dans l'épaisseur en face dudit trou traversant de la deuxième feuille.

L'élément de sécurité comporte, en configuration b), un deuxième empilement comportant l'intercalaire de feuilletage (mono ou multifeuillet avec un éventuel trou borgne de la face FB), et au moins un premier autre film polymère collé ou en contact adhésif avec la face FB nue ou revêtue d'un revêtement fonctionnel (filtre sélectif, couche chauffante donc etc premier film sur le revêtement fonctionnel).

Le deuxième empilement est notamment d'épaisseur totale E"3 en film(s) polymère au-dessus de la face FB d'au moins 30µm, 50µm, 80, 100µm et de préférence d'au plus 500µm, 400µm avec de préférence E"3<E3.

Ainsi selon l'invention, pour atteindre un niveau élevé de transmission on sélectionne :
1) un verre extérieur extraclair dans le proche infrarouge visé,
2) un verre intérieur plus absorbant dans le proche infrarouge visé et nécessairement évidé

Cette solution est plus performante que celle de l'art antérieur basée sur deux verres extraclairs pleins.

En outre en évitant l'usage d'un deuxième verre extraclair, elle améliore le confort (chaleur dans le véhicule) et l'esthétique et est plus économique.

La forme et les dimensions du trou traversant sont configurées selon les techniques de l'art de manière à transmettre et collecter efficacement et sélectivement l'ensemble des rayonnements traversant le vitrage (pare-brise, lunette etc).

Par exemple le trou est de même forme que le système de vision infrarouge tel que le LIDAR.

Le trou (ouvert ou fermé) peut être notamment de section droite convexe en particulier trapézoïdale de préférence, ou encore circulaire ou ovale ou ellipsoïdale ou encore rectangulaire, carrée...

Le trou a notamment une dimension définie par le champ de vision du LIDAR en fonction de son positionnement.

Le trou traversant de la deuxième feuille (de verre ou plastique) peut être libre ou occupé tout ou partie par exemple par une matière de remplissage transparente à la longueur d'onde de travail, et/ou occupé par une insertion d'une partie du LIDAR.

Le trou traversant peut être :
- trou fermé (entouré par la paroi de la deuxième feuille de verre ou plastique), donc au sein du vitrage notamment espacé de la tranche du vitrage la plus proche d'au moins 3cm ou 5cm
- ouvert ou débouchant, formant une encoche (périphérique).

Toutefois faire un trou peut fragiliser le vitrage en particulier :
- en cas de bris de verre si gravillons ou tout autre objet extérieur de petite taille qui tape dans la zone en face dudit trou traversant
- par propagation de fissure si éclat dans la zone en face du trou traversant
- contrainte mécanique dans la zone en face du trou traversant ou du verre interne-par propagation d'une fissure hors zone en face du trou traversant entrant dans la zone et entrainant la casse.

Si on retire tout l'intercalaire (cas a)) ou on garde tout ou partie du PVB (cas b)), trou borgne côté face FB par exemple, l'élément de sécurité en film(s) d'épaisseur maitrisée et transparent à la longueur d'onde de travail, assure (seul ou avec l'intercalaire restant) :
- un effet de type verre laminé (si casse) retient le verre cassé.
- un maintien de la structure globale,
pour empêcher la propagation si casse dedans et peut renforcer la résistance du verre sous contrainte (verre interne bombé) et retarder la casse.

Dans le cas b) la Demanderesse a constaté que si l'on conserve l'intercalaire tel que le PVB avec une face FB libre (ou avec un dépôt distinct d'un film ayant une certaine ténacité) le PVB se transforme moins bien et dégrade fortement la transmission lumineuse à la longueur d'onde de travail (et dans le visible) et peut être moins résistant et/ou moins adhérent à la première feuille de verre. Le deuxième empilement permet donc une transformation du PVB correcte vraisemblablement en assurant l'étanchéité pendant le dégazage. De préférence il est collé en face F3 autour du trou traversant.

La configuration a) ou b) peut comporter l'un au moins des films polymères fonctionnels (d'épaisseur submillimétrique et même d'au plus 200µm ou 100µm) notamment polyester, PET, transparents à la longueur d'onde de travail suivants: film filtre sélectif, film de sécurité ou anticasse, film chauffant, film antireflet ou AR (en dernier, avec une surface libre). En cas de plusieurs films, ils sont collés, par un adhésif PSA par exemple.

Notamment on préfère pour a) ou b) au plus trois films polymère ou deux films polymère (notamment hors bande avant et/ou arrière).

Naturellement un film peut combiner deux fonctions ou plus par ses surfaces (revêtement colorant sélectif, revêtement chauffant, AR par texturation ou revêtement, etc) et/ou en masse (filtre sélectif en masse, chauffant par fils par exemple en masse..).

Aussi, au moins un film polymère de l'élément de sécurité selon a) ou b) comporte au moins deux fonctions, de préférence une fonction par au moins un revêtement fonctionnel sur ledit film, fonctions notamment choisies parmi les suivantes : filtre sélectif, chauffante, antireflet, anticasse. Par exemple :
- film avec un revêtement filtre sélectif et/ou un revêtement antireflet (même face ou faces opposées)
- film filtre sélectif (coloré en masse) avec un revêtement antireflet et/ou avec un revêtement chauffant (face opposées)
- film anti-casse ou de sécurité avec un revêtement filtre sélectif et même avec un revêtement antireflet (même face ou faces opposées).

Dans l'ensemble de la description AR veut dire antireflet au moins à la longueur d'onde de travail.

Dans le cas a) l'intercalaire de feuilletage (incolore, etc) présente un trou traversant dans l'épaisseur de préférence au moins prolongeant le trou traversant de la deuxième feuille, éventuellement plus large notamment d'au plus 10mm ou plus étroit d'au plus 3mm ou 1mm, notamment de section trapézoïdale, ou rectangulaire ou circulaire etc (notamment de même forme et même homothétique à la section du trou traversant du verre).

Dans le cas b) l'intercalaire de feuilletage (incolore, etc) présente éventuellement un trou partiel dans l'épaisseur de préférence au moins prolongeant le trou traversant de la deuxième feuille, éventuellement plus large notamment d'au plus 10mm ou plus étroit d'au plus 3mm ou 1mm, notamment de section trapézoïdale, ou rectangulaire ou circulaire etc (notamment de même forme et même homothétique à la section du trou traversant du verre).

La face FB de l'intercalaire de feuilletage peut être trouée partiellement (sous cas du cas b)) ou entièrement (cas a)) en épaisseur au droit du trou traversant, au niveau de la face F3 ledit trou étant selon une forme donnée (par exemple trapézoïdale) s'inscrivant dans un rectangle avec un trou de l'intercalaire de feuilletage (PVB)
- plus large que ledit trou traversant par exemple d'au plus 15mm (PVB en retrait)
- égal au trou traversant
- inférieure audit trou traversant d'au plus 5mm, 3mm, 1mm.

Pour renforcer la protection :
- l'élément de sécurité s'étend de préférence dans une zone de bordure dudit trou traversant sur au moins 2mm, 5mm, 1cm et même d'au moins 3cm ou 5cm. Dans le cas d'un empilement au moins un des films polymère peut s'étendre dans la zone de bordure
- et/ou, l'élément de sécurité présente au moins une épaisseur de films cumulée d'au moins 100µm et de préférence d'au plus 600µm, 400µm, 300µm.

Dans le cas a), la présence dans la bordure peut permettre au(x) film(s) polymère d'être retenu ou au moins bien positionné par rapport au trou traversant.

Dans le cas b), la présence dans la bordure peut permettre de garantir une meilleure étanchéité donc transformation de l'intercalaire (PVB), avec ou sans trou borgne, en face du trou traversant de la deuxième feuille.

Il y a aussi un aspect esthétique car ses bords sont par exemple masqués par une couche de masquage (émail ou autre sur F2, encre sur PVB).

De préférence, l'élément de sécurité est lié (collé, en contact adhésif) à la face F2 (liaison avant) et également en regard de la zone de bordure du trou est lié (collé, en contact adhésif) à la face F3 (liaison arrière) dans cette zone de bordure plutôt qu'espacé ou plaqué contre la face F3.

Le premier film polymère (seul) ou le premier empilement ou encore le deuxième empilement peut être lié (collé) à la face F3 dans une zone de bordure dudit trou traversant sur au moins 2mm, 5mm, 1cm et même d'au moins 3cm ou 5cm.

Dans le cas a) le premier film polymère (seul) ou le premier empilement est collé par un adhésif notamment sensible à la pression PSA ou thermofusible (par exemple dépôt par voie liquide ou ruban double face, d'épaisseur de 1 à 50µm) et/ou comporte une bande locale polymère dit bande arrière (tel que ou de type PVB) en contact adhésif (direct) avec la face F3 nue ou revêtue d'un revêtement fonctionnel (de masquage, de contrôle solaire , chauffant etc) donc bande arrière éventuellement en contact adhésif avec le revêtement fonctionnel.

Dans le cas b) le deuxième empilement comporte une bande locale polymère d'adhésion dite bande arrière (tel que PVB ou de type PVB) en contact adhésif avec la face F3 nue ou revêtue d'un revêtement fonctionnel (de masquage, de contrôle solaire, chauffant etc) donc bande arrière éventuellement en contact adhésif avec le revêtement fonctionnel.

La bande arrière peut être absente sous ledit trou traversant ou dépassant d'au plus 5mm, 3mm sous ledit trou traversant. Sous la face F3, elle peut aussi dépasser du ou des films sous-jacents (premier ou deuxième empilement notamment l'un au moins de ceux-là: film filtre sélectif, film AR, film de sécurité ou anticasse notamment d'au moins 150µm ou 200µm, film chauffant etc) notamment d'au plus 5cm ou 1cm pour mieux entrer en contact avec le PVB (lors du feuilletage) ou pour renforcer cette zone. Sous la face F3, la bande arrière notamment à base de poly(vinyl butyral) (PVB) peut être en contact adhésif (latéral) avec l'intercalaire de feuilletage pour former une continuité de matière (pas d'espace entre l'intercalaire et la bande arrière).

La bande arrière même si en PVB peut être un PVB distinct du PVB de l'intercalaire et/ou à tout le moins d'épaisseur différente de E3 par exemple plus mince. L'interface bande arrière (PVB) /intercalaire (PVB) peut être discernable.

Pour a), le premier film polymère peut être collé ou en contact adhésif avec la face F2. Pour a), le premier film polymère notamment polyester, notamment PET est par exemple collé à la face F2 par
- une couche d'adhésion de préférence qui est un adhésif sensible à la pression PSA ou thermofusible
   ou
- par une bande locale polymère dite bande avant, en contact adhésif avec la face F2 en face dudit trou traversant, de préférence à base de poly(vinyl butyral) (PVB) d'épaisseur submillimétrique et mieux < E3, notamment d'au plus 0,4mm, la bande avant est de préférence en contact adhésif avec l'intercalaire de feuilletage.

La bande avant peut aussi dépasser (en face de la zone de bordure du trou traversant) du ou des films sur-jacents du premier film polymère seul ou du premier empilement (notamment l'un au moins de ceux-là : film filtre sélectif, film AR, film de sécurité, film chauffant etc) notamment d'au plus 5cm ou 1cm pour mieux entrer en contact avec le PVB (lors du feuilletage).

La bande avant notamment à base de poly(vinyl butyral) (PVB) peut être en contact adhésif (latéral) avec l'intercalaire de feuilletage pour former une continuité de matière (pas d'espace entre l'intercalaire et la bande arrière).

La bande avant même si en PVB peut être un PVB distinct du PVB de l'intercalaire et/ou à tout le moins d'épaisseur différente de E3 par exemple plus mince. L'interface bande avant (PVB) /intercalaire (PVB) peut être discernable.

La bande avant et/ou arrière est à base (en) poly(vinyl butyral) (PVB) peut contenir moins de 15% en poids de plastifiants, de préférence moins de 10% en poids et encore mieux moins de 5% en poids et en particulier sans plastifiant notamment d'épaisseur d'au plus 0,5mm, de préférence au plus 0,3mm et mieux d'au plus 0,15mm en particulier de 25 à 100µm, 40 à 70µm et même d'au plus 50µm
Et l'intercalaire de feuilletage est à base en poly(vinyl butyral) (PVB) - avec plastifiant, notamment avec plus de 15% en poids de plastifiants classiques- et notamment d'épaisseur E3 d'au moins 0,3mm et mieux d'au moins 0,5mm.

**Sous la face** F3, la bande arrière et/ou la bande avant notamment à base de poly(vinyl butyral) (PVB) est en contact adhésif avec l'intercalaire de feuilletage.

En particulier on peut choisir comme bande avant et/ou arrière PVB sans plastifiant le produit « MOWITAL LP BF » de la société KURARAY avec l'épaisseur que l'on souhaite.

Pour simplifier et accélérer la fabrication du vitrage on peut préférer utiliser un élément préassemblé par collage ou contact adhésif hors ligne de feuilletage.

On préassemble bande avant PVB/ premier film polymère (seul) ou premier empilement et même on peut placer ce préassemblage sur un feuillet PVB d'intercalaire (troué sous ledit trou traversant) ou sur une bande arrière PVB, par chauffe locale. La bande avant est en contact adhésif avec la face F2 et avant la face avant F'A du film en face dudit trou traversant.

Pour b) le deuxième empilement comporte l'une des séquences suivantes :
- (film polymère)/ intercalaire tel que PVB (avec fils chauffants optionnels)/ couche filtre sélectif/colle telle que PSA/film AR formant surface libre en face trou traversant
- (film polymère)/ intercalaire tel que PVB (avec fils chauffants optionnels)/ couche filtre sélectif/colle telle que PSA/film
- (film polymère)/ intercalaire tel que PVB (avec fils chauffants optionnels)/ film sélectif (/colle telle que PSA/film AR formant surface libre en face trou traversant)
- revêtement fonctionnel étant filtre sélectif/ intercalaire tel que PVB (avec fils chauffant optionnel)/film AR formant surface libre en face trou traversant
- revêtement fonctionnel étant filtre sélectif ou couche chauffante/ intercalaire tel que PVB (/ autre premier film notamment AR formant surface libre en face trou traversant).
- film(s) polymère / intercalaire tel que PVB/autre premier film notamment AR formant surface libre en face trou traversant.

Pour la configuration b) l'intercalaire est par exemple un tricouche PVB/ film polymère tel que PET fonctionnel/PVB, l'autre premier film polymère s'étend hors zone dudit trou traversant et est une portion dudit film fonctionnel, le film PET fonctionnel étant éventuellement porteur d'une couche de contrôle solaire (ou toute autre couche absorbante à la longueur d'onde de travail) absente en regard dudit trou traversant (si nécessaire).

Pour b) la face FA de l'intercalaire (PVB, tricouche etc) peut être en contact adhésif avec la face F2 nue ou revêtue d'un revêtement fonctionnel (filtre sélectif, couche chauffante, etc) ou encore la face FA est liée avec un ou des films polymères sous-jacent(s) (film sélectif, juste pour la sécurité qui est notamment d'épaisseur Ei d'au moins 50µm

Pour b) la face FB peut présenter un trou borgne dans l'épaisseur en face dudit trou traversant de la deuxième feuille, notamment logeant le premier autre film polymère (voire d'autre(s) film(s) collé(s) dessus).

Le trou borgne en FB peut être utile si film(s) sus jacent(s) trop épais
Pour b) la face FA peut présenter un trou borgne dans l'épaisseur en face dudit trou traversant de la deuxième feuille et la face F2 est en contact adhésif ou liée avec un ou des films polymère (collés) sous-jacent (s) à FA film(s) qui est notamment d'épaisseur Ei d'au moins 50µm, 80µm ou 100µm, 150µm notamment film anticasse. Le trou borgne en FA peut être utile si film(s) sous-jacent(s) trop épais.

Le PVB avec un trou traversant peut être teinté et absorbant à la longueur d'onde de travail.

Par ailleurs, le vitrage selon l'invention peut comporter une platine opaque collée en face F4 comportant un trou au droit dudit trou traversant (plus large ou dans le prolongement dudit trou traversant), en particulier platine plastique éventuellement renforcée, opaque, avec des moyens aptes à supporter ou maintenir un système de vision infrarouge à ladite longueur d'onde de travail tel qu'un LIDAR.

Notamment sur la face F4 peut être collée une platine notamment d'épaisseur subcentimétrique en particulier 1 à 3mm, et même 1,5 à 2,5mm. Elle est par exemple en plastique éventuellement renforcé (fibres etc) par exemple polycarbonate (PC), polyméthacrylate de méthyle (PMMA), polyéthylène (PE), polypropylène (PP), polyamide (PA66), acrylonitrile butadiène styrène (ABS), et leurs alliages ABS-PC, polystyréne (PS), acrylonitrile styrène acrylate ASA, à base de polymère de formaldéhyde (polyoxymethylene POM), de terphényle polybromé (PBT), de préférence chargé en fibres de verre pour encore plus de résistance, notamment le PA66 GF30 (30% de fibres de verre).

Cette platine peut servir pour porter ou contribuer à maintenir ou stabiliser le LIDAR et/ou un boitier masquant le LIDAR. Cette platine peut être trouée au droit dudit trou traversant.

Comme ledit trou traversant, cette platine est de préférence périphérique notamment en bordure supérieure du vitrage. Par exemple elle est en zone centrale, zone (classique) du rétroviseur (présent ou absent).

Elle peut aussi porter ou contribuer à maintenir ou stabiliser un autre ou des autres éléments fonctionnels comme des capteurs par exemple capteur d'une caméra dans le visible et/ d'une caméra thermique (au-delà de 2,5µm, allant au moins de 9,5 à 10,5µm et de préférence de 8 à 12µm) ou tout autre capteur (pluie, de luminosité extérieure etc). Elle comporte autant de trous que nécessaire (et de taille adaptée) pour le ou les capteurs. Elle peut même porter ou contribuer à maintenir ou stabiliser la caméra thermique ou la caméra visible et/ou un boitier individuel ou commun au LIDAR, à la caméra thermique et/ou à la caméra dans le visible.

Avantageusement, le vitrage selon l'invention présente sous ledit trou traversant de la deuxième feuille, de préférence du côté de la face F2, un filtre sélectif, absorbant dans le visible et transparent à au moins une longueur d'onde dite de travail dans l'infrarouge dans une gamme allant de 800nm à 1800nm, notamment 905±5nm et/ou 1550±5nm et/ou encore 850±5nm.

En face dudit trou traversant, le vitrage feuilleté (grâce au filtre sélectif) présente alors aussi:
- une transmission totale d'au plus 10,0%, 5,0%, ou 1,0% ou 0,5% dans le visible (notamment au moins à une valeur de référence de 550nm +-50nm ou dans une gamme allant de 500 à 600 nm ou entre 400 et 700nm) mesurée à 90°ou même de préférence aussi à 60° ou même jusqu'à 60° côté face F1, mieux au moins dans une gamme allant de 500 à 600 nm ou entre 400 et 700nm même dans toute la gamme du visible entre 390nm et 750nm, notamment 0,5% sur 390-750nm, et 0,1% sur 390-600nm, en particulier le filtre sélectif masquant (significativement) le trou traversant vu de la face F1.

De préférence, le filtre sélectif est lié (collé, en contact adhésif) à la face F2 (liaison avant) ou à la face F3 (liaison arrière) ou les deux, plutôt que plaqué contre la face F2 et/ou contre la face F3.

Le filtre sélectif sert à cacher le système de vision infrarouge à ladite longueur d'onde de travail tel qu'un LIDAR de l'extérieur du véhicule sans pénaliser l'excellente transmission à la longueur d'onde de travail.

S'il inclut un film polymère il peut contribuer à la sécurité.

L'invention convient tout particulièrement pour les vitrages (pare-brise, lunette etc) aux véhicules autonomes ou semi autonome : niveau L2+, L3, L4 et L5 (« full » autonome donc autonome) ainsi que les véhicules type Robot Taxi et navette (Shuttle) etc. L'oxyde de fer, présent comme impureté dans la plupart des matières premières naturelles utilisées en verrerie (sable, feldspath, calcaire, dolomie...), absorbe à la fois dans le domaine du visible et proche ultraviolet (absorption due à l'ion ferrique Fe³⁺) et surtout dans le domaine du visible et proche infrarouge (absorption due à l'ion ferreux Fe²⁺) c'est pourquoi on réduit l'oxyde de fer dans la première feuille de verre.

Dans la deuxième feuille de verre (si en verre), on peut donc choisir une teneur en oxyde de fer plus élevée.

L'angle du vitrage notamment un pare-brise de véhicule routier peut être typiquement entre 21° et 36° par rapport au sol et en moyenne de 30°. Aussi, une haute transmission à 60° est particulièrement avantageuse car c'est l'angle d'incidence du faisceau du LIDAR sur le parebrise si celui-ci est à 30° du sol.

La transmission dans l'infrarouge est mesurée par exemple avec un spectromètre Fourier tel que le BrukerVertex-70.

Pour quantifier la transmission du verre dans le domaine du visible, on définit souvent un facteur de transmission lumineuse, appelée transmission lumineuse, souvent abrégée « T_{L} », calculé entre 380 et 780 nm et ramené à une épaisseur de verre de 3,2 mm ou 4 mm, selon la norme ISO 9050 :2003, en prenant donc en considération l'illuminant D65 tel que défini par la norme ISO/CIE 10526 et l'observateur de référence colorimétrique C.I.E. 1931 tel que défini par la norme ISO/CIE 10527.

Naturellement la transmission lumineuse T_{L} du vitrage feuilleté dans une zone sans trou (zone centrale du pare-brise) est de préférence d'au moins 70% ou 75%, 80% ou 85%, 88%.

Ledit filtre sélectif est par exemple local de surface S0 donnée et la projection orthogonale de la surface S0 sur la deuxième feuille englobe au moins la section Sc du trou traversant.

Le filtre sélectif est par exemple une couche pleine voire même avec des discontinuités par exemple formant une (micro ou nano)grille.

Le filtre sélectif peut être de toute nature : revêtement (encre, vernis etc), film flexible, il peut être localisé au niveau dudit trou traversant ou plus étendu par exemple pour cacher un ou d'autres capteurs comme détaillé plus tard.

Le filtre sélectif est (principalement) dans une zone avec une seule feuille de verre. L'intégration du filtre sélectif sous le trou en particulier son collage sera décrite en détail ci-après afin d'éviter la création de défauts optiques (distorsion etc) en particulier par plissement, délamination ou apparition de bulles ou pour faciliter son positionnement précis ou la rapidité de son installation industriellement.

Pour un filtre sélectif impliquant un film polymère on préfère qu'il soit en contact adhésif avec la face F2 ou avec l'intercalaire de feuilletage.

Le filtre va cacher le trou et le LIDAR mais on peut aussi souhaiter couvrir une zone dépourvue de couche de masquage opaque (absorbant à la longueur d'onde de travail) par exemple une épargne de cette couche ou encore une zone contiguë ou au voisinage.

Le filtre sélectif peut avoir un contour fermé, entourant le trou (présent sur tout le pourtour du trou fermé) par exemple de forme similaire ou homothétique au trou. Le filtre sélectif peut aussi être une forme simple géométrique (rectangle etc) dans laquelle s'inscrit le trou fermé.

Le trou traversant avec la section constante ou variable, notamment trapézoïdale ou rectangulaire ou en disque ou ovale, est par exemple de plus petite dimension (diamètre) d'au moins 2cm ,3cm , 5cm et de préférence de plus grande dimension d'au plus 30cm ou 25cm

Le filtre peut donc masquer en particulier une zone dite zone caméra pourvue de capteur(s) en particulier une caméra dans le visible ou dans l'infrarouge lointain (caméra thermique). Toutefois pour ce faire, le filtre sélectif présente une épargne (fermée ou débouchante) dans la zone prévue pour laisser passer les rayons lumineux issue de la scène à capter par la caméra visible ou thermique

Dans ledit trou traversant, il peut y avoir un insert de préférence de largeur d'au plus 1cm notamment en matière polymère. L'insert est monté au moins sur la paroi de la deuxième feuille de verre ou plastique délimitant le trou. Cet insert sera aussi caché par le filtre sélectif.

Pour ne pas identifier la zone LIDAR, le filtre sélectif ne forme pas de préférence une zone (sensiblement) opaque isolée (visible, identifiable depuis la face F1), adjacente à une zone transparente du vitrage feuilleté sur tout ou partie de son pourtour. Le filtre sélectif peut donc
- s'intégrer à une zone de masquage /décorative (comme celle habituelle en périphérie du vitrage) pourvu d'une épargne (débouchante ou fermée)
- être adjacente à cette zone de masquage
- et/ou s'étendre pour former tout ou partie de cette zone décorative. Avantageusement :
- le filtre sélectif s'étend au-delà dudit trou traversant, de l'extérieur prolonge une couche de masquage ou masque une épargne d'une couche de masquage périphérique.

Le filtre sélectif est défini par un L*1, a*1 b*1, définie dans l'espace chromatique L*a*b* CIE 1976. La couche de masquage de couleur C1 aussi est définie par un L*2, a*2 b*2 avec un écart colorimétrique ΔE* donné par la formule suivante $ΔE * = √ \left(ΔL{*}^{2}+Δa{*}^{2}+Δb{*}^{2}\right) .$

De préférence ΔE*<4, mieux ΔE*<2 (l'œil humain discerne difficilement), encore mieux ΔE*<1 (l'œil humain ne discerne pas).

La couche de masquage opaque est notamment sous forme d'au moins un revêtement sur l'une des première et deuxième feuilles et/ou sur l'intercalaire de feuilletage.

La zone est par exemple une bande rectangulaire le long d'un bord du vitrage, notamment bord longitudinal en particulier d'un pare-brise. La bande est notamment un bandeau sous tout le long du bord et élargie dans la zone (notamment centrale) avec ledit trou traversant et le filtre sélectif le camouflant.

La couche de masquage peut être de part et d'autre du trou (fermé) et même entourer le trou (fermé).

L'épargne peut avoir un contour fermé, entourant le trou par exemple de forme similaire ou homothétique au trou.

Le filtre sélectif peut donc s'étendre au-delà du trou traversant.

Dans une première configuration, il s'étend (largement) au-delà dans une zone de bordure du trou (donc sous la deuxième feuille verre) pour former à lui seul un élément de masquage en particulier une bande de masquage périphérique et de préférence le long d'un bord longitudinal du vitrage, notamment bord longitudinal d'un pare-brise voire même un cadre de masquage.

Dans ce cas le filtre sélectif a double fonctionnalité et peut remplacer tout ou partie de l'émail opaque (en face F2 et/ou F3 et/ou F4) ou l'encre imprimé sur l'intercalaire de feuilletage traditionnellement utilisé.

Dans une deuxième configuration, le filtre sélectif reste local, s'étend au-delà du trou d'au plus 50mm, le vitrage comportant en outre la couche de masquage opaque, sous forme d'au moins un revêtement sur l'une au moins des première et deuxième feuilles et/ou sur l'intercalaire de feuilletage plutôt qu'un élément teinté en masse.

En particulier (en dehors dudit trou traversant, dans la zone de bordure), le filtre sélectif est sur la face F2 sous l'élément de sécurité et est en contact avec la couche de masquage et même le filtre sélectif est un revêtement sur la couche de masquage voire sous la couche de masquage.

En particulier, la couche de masquage est sur la face F2, le filtre sélectif est espacé et au-dessus de la couche de masquage sur la face F2 ou est en contact avec la couche de masquage notamment forme un revêtement sur la couche de masquage, notamment recouvrement sur au plus 50mm.

En particulier, le filtre sélectif est un revêtement sur la face F2 qui est recouvert par la couche de masquage notamment recouvrement sur au plus 50mm.

La couche de masquage opaque est de préférence une couche continue (aplat avec un bord plein ou en variante un bord en dégradé (ensemble de motifs).

Le filtre sélectif est entre la face F2 et la face F3.

Sous ledit trou, le filtre sélectif peut comporter un film polymère (flexible) d'épaisseur submillimétrique (pur éviter surépaisseur) et même d'au plus 0,5mm/0,3mm/0,15mm contre la face F2 et lié à la face F2 dans la zone de bordure dudit trou.

Toutefois, pour éviter tout risque de distorsions optiques (présence de bulles etc) on préfère que dans la zone dudit trou traversant le filtre sélectif soit lié à la face F2 : soit le filtre sélectif comporte un film polymère précité collé (par exemple un film comme un PET qui ne colle pas au verre même après feuilletage) ou en contact adhésif avec la face F2 (par exemple un matériau comme le PVB qui colle au verre après feuilletage) soit le filtre sélectif est un revêtement sur la face F2.

Dans une réalisation, le filtre sélectif comporte un film polymère, notamment PET, de préférence d'épaisseur d'au plus 0,3mm/0,15mm, en particulier:
- un film polymère colorant, notamment PET, d'épaisseur d'au plus 0,3mm/0,15mm, comportant un agent colorant dans la masse
- et/ou film (incolore ou teinté) revêtu d'une couche colorante en un composé comportant une matrice (organique, polymérique, hybride organique minérale : voie sol gel) et un agent colorant dispersé dans ladite matrice ledit agent colorant absorbant (sensiblement la totalité de) la lumière située dans ledit domaine du visible et étant (sensiblement) transparent à ladite longueur de travail sur une face principale.

Dans une réalisation, le filtre sélectif comporte une couche en un composé comportant une matrice (organique, polymérique, minérale ou hybride) et un agent colorant dispersé dans ladite matrice, ledit agent colorant absorbant (sensiblement la totalité de) la lumière située dans ledit domaine du visible et étant (sensiblement) transparent à ladite longueur de travail, couche formant dans la zone dudit trou traversant de la deuxième feuille un revêtement :
- sur la face F2
- ou l'intercalaire de feuilletage côté face FA ou FB, de préférence en PVB, en - particulier encre comportant en outre des particules PVB
- ou sur un film polymère additionnel notamment PET sur une face principale côté F2 ou F3, d'épaisseur d'au plus 0,3mm/015mm de préférence liée à la face F2.

La couche colorante peut être d'épaisseur submillimétrique et même d'au plus 20µm.

Le composé/la matrice polymérique de la couche colorante est choisi parmi des monomères, des oligomères, ou des polymères comprenant au moins une fonction méthacrylate, des époxydes, des vernis constitués de particules dispersées de PVB, latex, polyuréthane ou acrylate.

Le filtre sélectif peut contenir tout pigment ou colorant possédant une transmittance dans l'infrarouge plus élevée que sa transmittance dans le visible comme une encre noire proche infrarouge qui absorbe substantiellement les longueurs d'ondes dans le visibles en transmettant celles dans le proche infrarouge. Par exemple, le filtre sélectif (en couche) peut contenir des colorants ou encres comme les encres SpectreTM, par exemple SpectreTM 100, 110, 120, 130, 140, 150, ou 160 (Epolin, Newark, NJ); les encres Mimaki, par exemple Mimaki ES3, SS21, BS3, SS2, ou HS (Mimaki Global, Tomi-city, Nagano, Japan); ou les encres Seiko, par exemple Seiko 1000, 1300, SG700, SG740, ou VIC (Seiko Advance Ltd., Japan) ou encore encre noire :IR9508 de MingBo anti Forgery Technology Co Itd.

Le filtre sélectif (en couche) peut contenir un ou plusieurs composants de colorant noir, cyan, magenta ou jaune

Le filtre sélectif (en couche) peut être un revêtement incluant des colorants ou pigments ou les deux. Dans certains exemples, la couche absorbant des longueurs d'ondes de manière sélective peut inclure Lumogen^{®} Black FK 4280 ou Lumogen Black FK 4281 (BASF, Southfield, MI).

Dans certains exemples, le filtre sélectif (en couche) peut inclure un film multicouche, avec une ou plusieurs couches du film multicouche incluant des colorants, des pigments ou les deux.

De préférence :
- l'agent colorant est choisi parmi le Sudan Black B^{®}ou la Nigrosine Solvent black 5, et de préférence est le Sudan Black B^{®}
- l'agent colorant représente entre 0,1 et 10% poids de la couche, de préférence entre 0,2 et 3% poids de la couche.

Le filtre sélectif (en couche) peut être un vernis notamment de moins de 30µm.

Pour le filtre sélectif en couche, on peut jouer sur l'épaisseur de couche ou sur le % massique d'agent colorant en particulier au moins de 1%, 5% à 20%, 30%.

Le filtre sélectif peut comprendre un film polymère tel que de PET chargé dans sa masse en colorants par procédé de 'deep-dyeing' (teinture) en « roll-to-roll » ou rouleau à rouleau, notamment immersion dans un bain chaud avec les colorants. La concentration finale en colorant doit être suffisante pour apporter l'opacité dans le visible. On peut se référer au brevet WO9307329 ou US5162046

On peut sur un film polymère tel que PET mettre une couche sélective par face principale.

On peut combiner un film polymère tel que PET teinté en masse et une couche sélective sur ce film, un autre film polymère tel que PET, sur le PVB restant en face dudit trou ou sur la face F2.

Un film teinté en masse peut être ledit filtre sélectif par exemple le produit Smoke-plus films chez SolarGard.

Selon une réalisation :
- le premier film ou le premier autre film ou toute autre film d'empilement a) ou b) fait partie d'un filtre sélectif ou formant un filtre sélectif
- le premier ou deuxième empilement comportant un film AR formant surface libre en face trou traversant
- la couche fonctionnelle est un filtre sélectif (revêtement sur face F2) ou une couche chauffante, le premier film ou premier autre film est un film AR ou un simple film de sécurité et/ou chauffant, le premier ou deuxième empilement comprend en dernier film AR ou un revêtement AR. Le choix de la nature et/ou de l'épaisseur du ou des films polymères dépend notamment de la transparence à la longueur d'onde de travail, de la flexibilité et/ou de la ténacité recherchée.

On peut avoir un premier film polymère anticasse et un film polymère sélectif collé dessus voire un autre film AR en dernier.

Le ou les film(s) polymère selon l'invention peuvent s'adapter à la courbure de la première feuille, en particulier être souple (flexible ou semiflexible).

Le ou les films peut être, notamment, à base de polyester en particulier un polyéthylène téréphtalate (PET), polyéthylène naphtalate (PEN), de polycarbonate, un polyoléfine (polyéthylène, polypropylène), de polyuréthane, de polyméthacrylate de méthyle (PMMA), de polyamide, de polyimide, ou un polyvinyle chloride (PVC) voire de polymère fluoré tel que l'éthylène tétrafluoroéthylène (ETFE), le polyfluorure de vinylidène (PVDF), le polychlorotrifluoréthylène (PCTFE), l'éthylène de chlorotrifluoréthylène (ECTFE), les copolymères éthylène-propylène fluorés (FEP) ou un polystyrène (PS).

On préfère le PET (et l'intercalaire en PVB)
Il existe plusieurs types d'adhésifs. Des adhésifs thermofusibles (hotmelt) qu'il faut faire fondre et qui collent quand ils durcissent, des thermodurcissables qui durcissent lorsque leurs composants réagissent ou lorsqu'un solvant s'évapore, des adhésifs sensibles à la pression PSA qui collent tout de suite, par simple contact.

Selon l'invention, la colle PSA (sur face F2, F3, entre films, sur intercalaire comme PVB) peut être par exemple d'épaisseur d'au plus 50µm (type ruban adhésivé) en particulier d'au plus 20µm si dépôt par voile liquide.

La couche d'adhésion peut être une feuille d'adhésif sensible à la pression.

La couche d'adhésion (non adhésive) peut être par exemple un gel en particulier un hydrogel à base de polyacrylamide, polyvinyl alcool, polyuréthane, polysaccharide, polyéthylène glycol, acide polylactique, silicone.

La couche d'adhésion peut même être un adhésif sensible à la pression. Un adhésif sensible à la pression, abrégé PSA et communément appelé auto-adhésif, est un adhésif qui forme une liaison lorsqu'une pression lui est appliquée de manière à solidariser l'adhésif avec la surface à coller. Aucun solvant, ni d'eau, ou de chaleur n'est nécessaire pour activer l'adhésif. Il est utilisé dans des garnitures d'automobile, et dans une grande une grande variété d'autres produits.

Comme son nom l'indique "sensible à la pression", le degré de liaison entre une surface donnée et le liant autoadhésif est influencée par la quantité de pression utilisée pour appliquer l'adhésif sur la surface cible. D'autres facteurs interviennent également et sont importants pour une bonne adhérence telle que la douceur, l'énergie de surface, et l'élimination des contaminants.

Les PSA sont généralement conçus pour former une liaison et maintenir celle-ci à la température ambiante. L'homme de l'art veillera à choisir une formulation d'adhésif autoadhésif adaptée aux conditions de son utilisation. En effet, les PSA généralement voient leur adhérence se réduire ou disparaitre à basse température et voient leur capacité à tenir le cisaillement se réduire à températures élevées.

Les PSA sont généralement à base d'élastomère couplé avec un agent adhésif supplémentaire approprié ou agent « tackifiant » (par exemple, une résine ester).

Les élastomères peuvent être à base:
- d'acrylates, qui peuvent être suffisamment collant pour ne pas exiger un agent tackifiant supplémentaire.
- de nitriles
- de silicone, requérant des agents tackifiants spéciaux telles que des résines de silicate de type « MQ », composées de triméthyle silane monofonctionnel ("M") qui a réagi avec tétrachlorure de silicium quadrifonctionnel ("Q"). Les PSA à base de silicone sont par exemple des gommes et résines de polydiméthylsiloxane dispersées dans du xylène ou un mélange de xylène et toluène.
- des copolymères blocs à base de styrène tel que des copolymères blocs Styrène butadiène -styrène (SBS), Styrène-éthylène / butylène -styrène (SEBS), styrène-éthylène / propylène (SEP), Styrène isoprène -styrène (SIS),
- les éthers vinyliques.

Avantageusement, l'adhésif sensible à la pression est choisi parmi les PSA à base d'acrylates et les PSA à base de silicone.

Ces adhésifs sont commercialisés sous forme de rouleaux d'adhésifs double face. On peut citer comme PSA à base de silicone les adhésifs de Dow Corning^{®} tel que le 2013 Adhesive, 7657 Adhesive, Q2-7735 Adhesive, Q2-7406 Adhesive, Q2-7566 Adhesive, 7355 Adhesive, 7358 Adhesive, 280A Adhesive, 282 Adhesive, 7651 Adhesive, 7652 Adhesive, 7356 Adhesive.

Sans sortir du cadre de l'invention, l'intercalaire peut bien entendu comprendre plusieurs feuillets en matière thermoplastique de natures différentes, par exemple de duretés différentes pour assurer une fonction acoustique, comme par exemple décrit dans la publication US 6,132,882, notamment une ensemble de feuillets de PVB de duretés différentes. De même l'une des feuilles de verres peut être amincie par rapport aux épaisseurs classiquement utilisées.

L'intercalaire peut selon l'invention présenter une forme en coin, notamment en vue d'une application HUD (Head Up Display pour visualisation tête haute). Egalement l'un des feuillets de l'intercalaire peut être teinté dans la masse.

Comme intercalaire de feuilletage usuel, outre le PVB, on peut citer le polyuréthane PU utilisé souple, un thermoplastique sans plastifiant tel que le copolymère éthylène/acétate de vinyle (EVA), une résine ionomère. Ces plastiques ont par exemple une épaisseur entre 0,2 mm et 1,1mm, notamment 0,3 et 0,7mm. L'intercalaire de feuilletage peut comprendre un autre film plastique fonctionnel (transparent, clair ou teinté) par exemple un film en poly(éthylène téréphtalate) PET porteur d'une couche athermique, électroconductrice etc par exemple on a PVB/ film fonctionnel/PVB entre les faces F2 et F3.

Le film plastique transparent peut être d'une épaisseur comprise entre 10 et 100 µm. Le film plastique transparent peut être plus largement en polyamide, polyester, polyolefine (PE : polyéthylène, PP : polypropylène), polystyrène, polyvinyle chloride (PVC), poly téréphtalate d'éthylène (PET), polyméthacrylate de méthyle (PMMA), polycarbonate (PC). On préfère un film clair notamment le PET.

Comme on peut utiliser par exemple un film clair de PET revêtu, par exemple XIR de la société Eastman, un film coextrudé en PET-PMMA, par exemple du type SRF 3M^{®}, mais aussi de nombreux autres films (par exemple en PC, PE, PEN, PMMA, PVC), qui sont visuellement aussi transparents que possible et ne se modifient pas dans l'autoclave en ce qui concerne leur surface et leur consistance.

Un revêtement AR peut être directement sur un film polymère ou sur une sous- couche fonctionnelle (dont la couche colorante sélective ou encore une couche de type hard coat).

Un revêtement sélectif peut être directement sur un film polymère ou sur une sous-couche fonctionnelle.

La première feuille de verre peut comporter, sur une face libre d'un élément sous ou dans ledit trou traversant de la deuxième feuille, un revêtement antireflet à au moins une longueur d'onde dite de travail dans l'infrarouge dans une gamme allant de 800nm à 1800nm, élément choisi parmi :
- un film polymère, formant ou tout partie du filtre sélectif ou lié au filtre sélectif ou à - un film polymère de protection mécanique nu ou revêtu (de la couche active du filtre sélectif côté face F3 etc)
- l'intercalaire de feuilletage (au plus partiellement troué côté face FB logeant un filtre sélectif en film) nu ou revêtu (de la couche active du filtre sélectif en face Fa)

Le revêtement antireflet peut comprendre un empilement de couches minces diélectriques (d'oxyde et/ou de nitrures de métal ou de silicium par exemple) alternant haut et bas indices de réfraction (à la longueur d'onde de travail).

Le revêtement antireflet comporte de préférence une couche (fonctionnelle) de silice poreuse de préférence sol gel.

Dans un premier mode de réalisation, les pores sont les interstices d'un empilement non compact des billes nanométriques, notamment de silice, cette couche étant décrite par exemple dans le document US20040258929.

Dans un deuxième mode de réalisation, la couche poreuse est obtenue par le dépôt d'un sol de silice condensé (oligomères de silice) et densifié par des vapeurs de type NH3, cette couche étant décrite par exemple dans le document WO2005049757.

Dans un troisième mode de réalisation, la couche poreuse peut aussi être de type sol gel telle que comme décrite dans le document EP1329433. La couche poreuse peut aussi être obtenue avec d'autres agents porogènes connus : des micelles de molécules tensioactives cationiques en solution et, éventuellement, sous forme hydrolysée, ou de tensioactifs anioniques, non ioniques, ou des molécules amphiphiles, par exemple des copolymères blocs.

Dans un quatrième mode de réalisation, la couche poreuse peut aussi être de type sol gel telle que comme décrite dans le document WO2008/059170. La couche poreuse peut ainsi être obtenue avec des agents porogènes qui sont de préférence des billes polymériques.

Le revêtement antireflet notamment de silice poreuse selon l'invention peut avoir une épaisseur avantageusement comprise entre 10 nm et 10 µm (ces valeurs limites étant incluses), en particulier 50 nm et 1 µm et encore plus préférentiellement entre 70 et 500nm.

La couche de silice poreuse peut présenter des pores fermés d'au moins 20nm, 50nm ou 80nm éventuellement la couche fonctionnelle peut comporter des pores avec une concentration augmentant en direction de la surface libre.

Les pores peuvent avoir une forme allongée, notamment en grain de riz. Encore plus préférentiellement, les pores peuvent avoir une forme sensiblement sphérique ou ovale. On préfère que la majorité des pores fermés, voire au moins 80% d'entre eux, aient une forme donnée sensiblement identique, notamment allongée, sensiblement sphérique ou ovale.

Le revêtement antireflet peut comporter une sous couche de protection chimique notamment d'épaisseur d'au plus 200nm par exemple, notamment une couche de silice dense, par sol gel surmonté d'une couche fonctionnelle sol gel de silice poreuse. La sous-couche peut être à base de silice ou de dérivés au moins partiellement oxydés du silicium choisi parmi le dioxyde de silicium, des oxydes de silicium sous stoechiométriques, l'oxycarbure, l'oxynitrure ou l'oxycarbonitrure de silicium.

La sous-couche s'avère utile quand la surface sous-jacente est en verre silico-sodo-calcique car elle joue le rôle de barrière aux alcalins.

Cette sous-couche comprend donc avantageusement Si, O, éventuellement du carbone et de l'azote. Mais elle peut comprendre aussi des matériaux minoritaires par rapport au silicium, par exemple des métaux comme Al, Zn ou Zr. La sous-couche peut être déposée par sol-gel ou par pyrolyse, notamment par pyrolyse en phase gazeuse (CVD). Cette dernière technique permet d'obtenir des couches en SiOₓC_{y} ou en SiO₂ assez aisément, notamment par dépôt directement sur le ruban de verre float dans le cas de substrats verriers. Mais on peut aussi effectuer le dépôt par une technique sous vide, par exemple par pulvérisation cathodique à partir d'une cible de Si (éventuellement dopée) ou d'une cible en sous-oxyde de silicium (en atmosphère réactive oxydante et/ou nitrurante par exemple). Cette sous-couche a de préférence une épaisseur d'au moins 5 nm, notamment une épaisseur comprise entre 10nm et 200 nm, par exemple entre 80nm et 120 nm.

Le revêtement antireflet peut aussi comporter une surcouche si elle n'altère pas les propriétés antireflet.

On peut aussi mettre un revêtement antireflet également en face F1 en regard de celui côté face F2.

Le revêtement antireflet peut avoir la même forme que la section du trou par exemple trapézoïdale ou encore rectangulaire etc.

Bien que moins préféré à priori, le revêtement antireflet peut être uniquement dans une zone centrale en regard dudit trou traversant, il ne dépasse pas du trou traversant et même est espacé du bord du trou traversant de préférence d'au plus 1cm. Par exemple la surface libre dans le trou traversant présente une longueur et/ou un côté d'au moins 5cm, 10cm, 15cm et de préférence d'au plus 30cm.

Afin de limiter l'échauffement dans l'habitacle ou de limiter l'usage d'air conditionné, l'une des première et deuxième feuilles au moins (de préférence le verre extérieur) est teintée, et le vitrage feuilleté peut comporter également une couche réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), la ou chaque couche d'argent étant disposée entre des couches diélectriques.

On peut cumuler couche (à l'argent) en face F2 et/ou F3 et couche TCO en face F4. La couche TCO (d'un oxyde transparent électro-conducteur) est de préférence une couche d'oxyde d'étain dopé au fluor (SnO₂:F) ou une couche d'oxyde mixte d'étain et d'indium (ITO).

La couche réfléchissant ou absorbant le rayonnement solaire est de préférence absente en regard dudit trou traversant.

Le vitrage peut donc comporter sur la face F2 un revêtement fonctionnel qui est une couche athermique, notamment électroconductrice, éventuellement chauffante, en particulier un empilement à l'argent, si nécessaire absente dudit trou traversant au moins dans la zone centrale et en bordure du trou traversant entre la face F2 et Fa. L'intercalaire (ou un film polymère) peut comporter des fils métalliques notamment chauffants notamment ancrés (face FB ou FA) présents ou si nécessaire absents en regard dudit trou traversant de la deuxième feuille de verre.

Les fils chauffants notamment ont une épaisseur inférieure ou égale à 0,1 mm de préférence de cuivre, de tungstène, d'or, d'argent ou aluminium ou d'alliages d'au moins deux de ces métaux.

Dans un mode de réalisation, une zone de chauffage du vitrage (éventuellement local, en regard dudit trou traversant de la deuxième feuille de verre) comporte une pluralité de fils métalliques individuels, appelés « fils métalliques chauffants » qui relient des « busbars » entre eux. Le courant de chauffage passe par ces fils métalliques individuels. Les fils sont avantageusement très minces de manière à ne pas, ou seulement très peu, détériorer la transparence du vitrage. De préférence, les fils métalliques ont une épaisseur inférieure ou égale à 0,1 mm, en particulier comprise entre 0,02 et 0,04 mm, et idéalement entre 0,024 mm et 0,029 mm. Les fils métalliques contiennent de préférence du cuivre, du tungstène, de l'or, de l'argent ou de l'aluminium ou un alliage d'au moins deux de ces métaux. L'alliage peut également contenir du molybdène, du rhénium, de l'osmium, de l'iridium, du palladium ou du platine. Les fils métalliques sont de préférence isolés électriquement.

Pour le verre de la première feuille de verre et/ou de la deuxième feuille de verre, il s'agit de préférence d'un verre du type silico-sodo-calcique.

Le verre intérieur et/ou extérieur peut avoir subi un traitement chimique ou thermique du type durcissement, recuit ou une trempe (pour une meilleure résistance mécanique notamment) ou être semi trempé.

Le verre de la première feuille de verre et/ou de la deuxième feuille de verre est de préférence du type flotté, c'est-à-dire susceptible d'avoir été obtenu par un procédé consistant à déverser le verre fondu sur un bain d'étain en fusion (bain « float »). On entend par faces « atmosphère » et « étain », les faces ayant été respectivement en contact avec l'atmosphère régnant dans le bain float et en contact avec l'étain fondu. La face étain contient une faible quantité superficielle d'étain ayant diffusé dans la structure du verre.

La face F2 peut aussi bien être la face « étain » la face « atmosphère ».

La première feuille de verre peut être par exemple un verre silico-sodo-calcique comme le verre Diamant^{®} de Saint-Gobain Glass, ou Optiwhite^{®} de Pilkington, ou B270^{®} de Schott, ou Sunmax^{®} d'AGC ou d'autre composition décrite dans le document WO04/025334. On peut aussi choisir le verre Planiclear^{®} de la société Saint-Gobain Glass.

Avec les matières premières naturelles ordinaires, la teneur pondérale totale en oxyde de fer est de l'ordre de 0,1% (1000 ppm). Pour abaisser la teneur en oxyde de fer, on peut choisir des matières premières particulièrement pures.

Dans la présente invention, la teneur en Fe₂O₃ (fer total) de la première feuille de verre est de préférence inférieure à 0,015%, voire inférieure ou égale à 0,012%, notamment 0,010%, afin d'augmenter la transmission proche infrarouge du verre. La teneur en Fe₂O₃ est de préférence supérieure ou égale à 0,005%, notamment 0,008% pour ne pas trop pénaliser le coût du verre.

Pour augmenter plus encore la transmission de la première feuille de verre dans l'infrarouge, on peut diminuer la teneur en fer ferreux au profit de la teneur en fer ferrique, donc d'oxyder le fer présent dans le verre. On vise ainsi des verres ayant un « rédox » le plus faible possible, idéalement nul ou quasi nul. Ce nombre peut varier entre 0 et 0,9, des rédox nuls correspondant à un verre totalement oxydé.

Les verres comprenant de faibles quantités d'oxyde de fer, notamment moins de 200 ppm, voire moins de 150 ppm, ont une tendance naturelle à présenter des rédox élevés, supérieurs à 0,4, voire même à 0,5. Cette tendance est probablement due à un déplacement de l'équilibre d'oxydoréduction du fer en fonction de la teneur en oxyde de fer.

Le rédox de la première feuille de verre est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les verres selon l'invention (première et même deuxième feuille), la silice SiO₂ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

Ladite première feuille de verre peut avoir une composition chimique qui comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0, |
| SO₃ | 0,1 - 0,4% |
| Fe₂O₃ (fer total) | 0 à 0,015%, |
| Rédox | 0,1 - 0,3. |

Dans l'ensemble du texte, les pourcentages sont des pourcentages pondéraux.

Les feuilles de verre sont de préférence formées par flottage sur un bain d'étain. D'autres types de procédé de formage peuvent être employés, tels que les procédés d'étirage, procédé « down-draw », procédé de laminage, procédé Fourcault...

La composition de verre de la première feuille de verre peut comprendre, outre les impuretés inévitables contenues notamment dans les matières premières, une faible proportion (jusqu'à 1 %) d'autres constituants, par exemple des agents aidant à la fusion ou l'affinage du verre (CI...), ou encore des éléments provenant de la dissolution des réfractaires servant à la construction des fours (par exemple ZrO₂). Pour les raisons déjà évoquées, la composition selon l'invention ne comprend de préférence pas d'oxydes tels que Sb₂O₃, As₂O₃ ou CeO₂.

La composition de la première feuille de verre ne comprend de préférence aucun agent absorbant les infrarouges (notamment pour une longueur d'ondes comprise entre 800 et 1800nm). En particulier, la composition selon l'invention ne contient de préférence aucun des agents suivants : les oxydes d'éléments de transition tels que CoO, CuO, Cr₂O₃, NiO, MnO₂, V₂O₅, les oxydes de terres rares tels que CeO₂, La₂O₃, Nd₂O₃, Er₂O₃, ou encore les agents colorants à l'état élémentaire tels que Se, Ag, Cu. Parmi les autres agents de préférence exclus figurent également les oxydes des éléments suivants : Sc, Y, Pr, Sm, Eu, Gd, Tb, Dy, Ho, Tm, Yb, Lu. Ces agents ont bien souvent un effet colorant indésirable très puissant, se manifestant à de très faibles teneurs, parfois de l'ordre de quelques ppm ou moins (1 ppm = 0,0001%). Leur présence diminue ainsi très fortement la transmission du verre.

De préférence, la première feuille de verre présente une composition chimique qui comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0, |
| SO₃ | > 0,2 - 0,4% |
| Fe₂O₃ (fer total) | 0 à 0,015%, |
| Rédox | 0,2 - 0,30. |

La première feuille de verre peut présenter une composition chimique qui comprend les constituants suivants en une teneur variant dans les limites pondérales ci-après définies :

| | |
|---|---|
| SiO₂ | 60 - 75 % |
| Al₂O₃ | 0 - 10 % |
| B₂O₃ | 0 - 5 %, de préférence 0 |
| CaO | 5 - 15 % |
| MgO | 0 - 10 % |
| Na₂O | 5 - 20 % |
| K₂O | 0 - 10 % |
| BaO | 0 - 5 %, de préférence 0, |
| SO₃ | 0,1 - 0,4% |
| Fe₂O₃ (fer total) | 0 à 0,02%, |
| Rédox | 0,15 - 0,3. |

Dans la présente invention, la teneur en Fe₂O₃ (fer total) est de préférence inférieure à 0,015%, voire inférieure ou égale à 0,012%, notamment 0,010%, ce afin d'augmenter la transmission proche infrarouge du verre. La teneur en Fe₂O₃ est de préférence supérieure ou égale à 0,005%, notamment 0,008% pour ne pas trop pénaliser le coût du verre.

Le rédox est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les verres selon l'invention, la silice SiO₂ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

D'autres compositions préférées selon l'invention sont reproduites ci-après :

| | |
|---|---|
| SiO₂ | 65 - 75 % |
| Al₂O₃ | 0 - 3 % |
| CaO | 7 - 12 % |
| MgO | 2 - 5 % |
| Na₂O | 10 - 15 % |
| K₂O | 0 - 5% |
| SO₃ | 0,1 - 0,3% |
| Fe₂O₃ (fer total) | 0 à moins de 0,015%, |
| Rédox | 0,1 - 0,3. |

D'autres compositions préférées selon l'invention sont reproduites ci-après :

| | |
|---|---|
| SiO₂ | 65 - 75 % |
| Al₂O₃ | 0 - 5 % |
| CaO | 7 - 12 % |
| MgO | 1 - 5 % |
| Na₂O | 10 - 15 % |
| K₂O | 0 - 5 % |
| SO₃ | 0,2 - 0,4% |
| Fe₂O₃ (fer total) | 0 à moins de 0,015%, |
| Rédox | 0,1 - 0,3. |

Naturellement l'application la plus recherchée est que le vitrage soit un pare-brise d'un véhicule routier (automobile) ou même ferroviaire (à vitesse modérée).

L'invention se rapporte également un véhicule notamment autonome ou semi autonome incorporant le vitrage de véhicule selon l'invention, notamment formant un pare-brise.

L'invention se rapporte également à un dispositif, notamment véhicule (routier), qui comprend :
- le vitrage tel que décrit précédemment
- un système de vision infrarouge à ladite longueur d'onde de travail, tel que le LIDAR, disposé dans l'habitacle derrière ledit vitrage de façon à envoyer et/ou recevoir un rayonnement après traversée de la première feuille de verre au niveau dudit trou traversant.

L'invention concerne un procédé de fabrication dudit vitrage feuilleté tel que décrit précédemment tel que :
avant feuilletage, en face dudit trou traversant et dans une zone de bordure dudit trou traversant, la face F2 comportant ledit élément de sécurité (selon la configuration a) notamment avec une épaisseur totale d'au moins 0,2mm et même d'au plus 0,15mm, l'intercalaire de feuilletage, notamment PVB, mono ou multifeuillet, comporte un trou traversant dit d'intercalaire en face dudit trou traversant de la deuxième feuille (et s'étendant dans une zone de bordure dudit trou traversant) après ledit feuilletage le trou d'intercalaire est égal ou plus large que le trou traversant ou dépasse d'au plus 5mm dans le trou traversant de la deuxième feuille
ledit élément de sécurité est dans ledit trou d'intercalaire
et dans la zone de bordure dudit trou traversant, ladite bande arrière est présente entre l'élément de sécurité et la face F3
de préférence après ledit feuilletage
au niveau dudit trou d'intercalaire, l'élément de sécurité est en contact adhésif avec l'intercalaire (par sa tranche)
et/ou la bande arrière est en contact adhésif avec l'intercalaire, éventuellement dépasse d'au plus 5mm dans le trou traversant de la deuxième feuille.

L'invention concerne un procédé de fabrication dudit vitrage feuilleté tel que décrit précédemment tel que avant feuilletage, en face dudit trou traversant et dans une zone de bordure dudit trou traversant, la face F2 comportant ledit élément de sécurité selon a) notamment avec une épaisseur totale d'au moins 0,2mm, l'intercalaire de feuilletage, notamment PVB, comporte un premier feuillet ou un premier multifeuillets un premier trou traversant dit d'intercalaire en face dudit trou traversant de la deuxième feuille et s'étendant dans une zone de bordure dudit trou traversant ledit élément de sécurité est dans ledit premier trou d'intercalaire
l'intercalaire de feuilletage comporte un deuxième feuillet présentant un deuxième trou d'intercalaire moins large que le premier trou d'intercalaire et s'étendant dans la zone de bordure dudit trou traversant entre l'élément de sécurité et la face F3
de préférence après ledit feuilletage
au niveau dudit premier trou d'intercalaire, l'élément de sécurité est en contact adhésif avec l'intercalaire (par sa tranche)
le deuxième trou d'intercalaire éventuellement dépasse d'au plus 5mm dans le trou traversant de la deuxième feuille.

L'invention concerne un procédé de fabrication dudit vitrage feuilleté tel que décrit précédemment tel que
avant feuilletage, en face dudit trou traversant et dans une zone de bordure dudit trou traversant, la face F2 comportant ledit élément de sécurité selon a) notamment avec une épaisseur totale d'au moins 0,2mm, l'intercalaire de feuilletage, notamment PVB, comporte un premier feuillet ou un premier multifeuillets un premier trou traversant dit d'intercalaire en face dudit trou traversant de la deuxième feuille
et dans la zone de bordure dudit trou traversant ledit élément de sécurité est dans ledit trou d'intercalaire
l'intercalaire de feuilletage comporte un deuxième feuillet présentant un deuxième trou d'intercalaire moins large que le premier trou d'intercalaire et dans la zone de bordure dudit trou traversant entre l'élément de sécurité et la face F3
de préférence après ledit feuilletage
au niveau dudit premier trou d'intercalaire, l'élément de sécurité est en contact adhésif avec l'intercalaire
le deuxième trou d'intercalaire éventuellement dépasse d'au plus 5mm dans le trou traversant de la deuxième feuille .

En outre, avant la formation de la structure à feuilleter, on peut préassembler ledit élément de sécurité comportant ladite bande avant et/ou ladite bande arrière ou selon la configuration b) avec ladite bande arrière.

Pour simplifier et accélérer la fabrication du vitrage on peut préférer utiliser un élément de sécurité préassemblé par collage ou contact adhésif hors ligne de feuilletage.

On préassemble par exemple bande avant PVB/ film(s) polymère et même on peut placer et lier l'ensemble sur un feuillet PVB d'intercalaire -(troué ou non sous ledit trou traversant) ou sur une bande arrière PVB , par exemple par chauffe locale. Notamment on peut former un élément préassemblé avant feuilletage suivant : feuillet avant PVB (côté face F2) /film(s) polymère et avec un feuillet PVB troué lié au feuillet avant.

En outre, avant la formation de la structure à feuilleter on peut préassembler ledit élément de sécurité selon la configuration b) notamment avec FA ayant un trou borgne pour loger film(s) polymère sous-jacent et/ou avec FB ayant un trou borgne pour loger au moins premier film polymère.

Certains modes de réalisations avantageux mais non limitatif de la présente invention sont décrits ci-après, qui peuvent bien entendu combinés entres eux le cas échéant.
La figure 1 schématise en vue de coupe partielle un pare-brise 100 dans un premier mode de réalisation de l'invention avec un système de vision infrarouge 7 tel qu'un LIDAR. La figure 1' est une vue de détail de la figure 1
La figure 1a une vue de face partielle du pare-brise (côté habitacle) de la figure 1.
La figure 1b schématise en vue de face (côté extérieur) le pare-brise 100 de la figure 1.
La figure 1c schématise en vue de face (côté extérieur) le pare-brise 100 de la figure 1 dans une variante.
La figure 1d schématise en vue de face (côté extérieur) le pare-brise 100 de la figure 1 dans une variante.
La figure 1e schématise en vue de face (côté extérieur) le pare-brise 100 de la figure 1 dans une variante.
La figure 2 schématise en vue de coupe partielle et de détail autour du trou traversant d'un pare-brise 200 dans un deuxième mode de réalisation de l'invention.
La figure 3 schématise en vue de coupe partielle et de détail autour du trou traversant d'un pare-brise 300 dans un troisième mode de réalisation de l'invention.

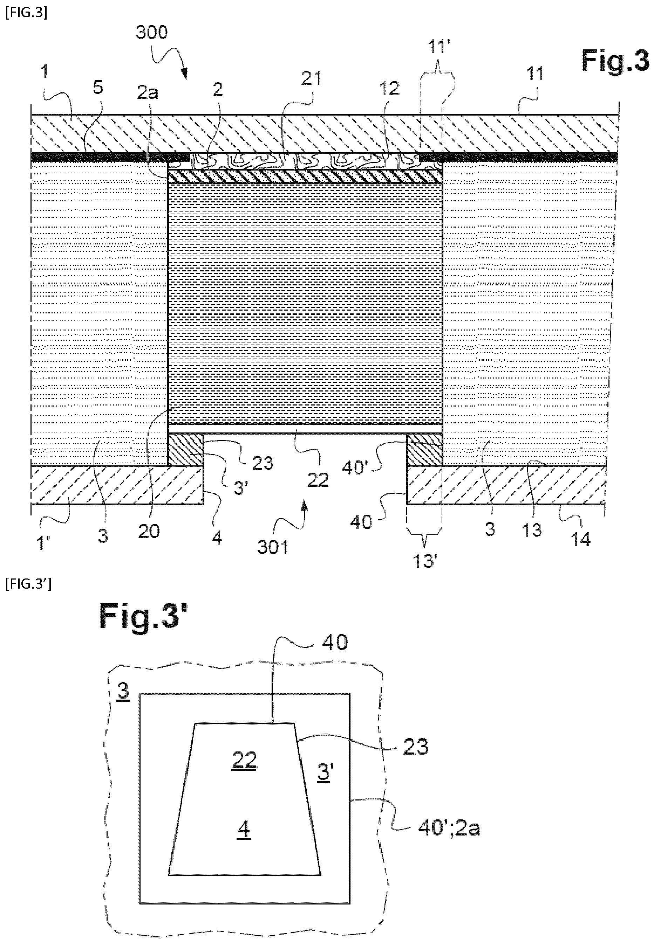

La figure 3' schématise en vue de face (côté habitacle) le pare-brise 300 de la figure 3.

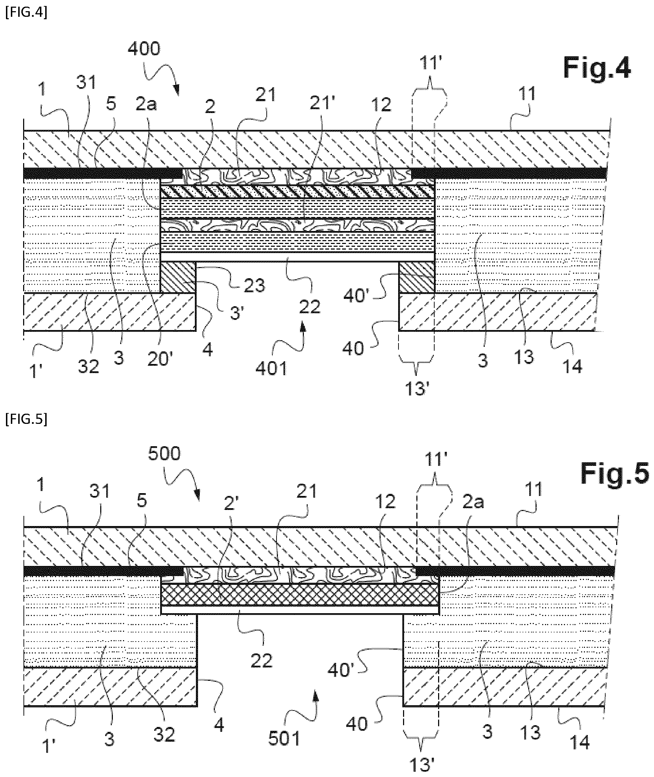

La figure 4 schématise en vue de coupe partielle et de détail autour du trou traversant d'un pare-brise 400 dans un quatrième mode de réalisation de l'invention.
La figure 5 schématise en vue de coupe partielle et de détail autour du trou traversant d'un pare-brise 500 dans un cinquième mode de réalisation de l'invention.

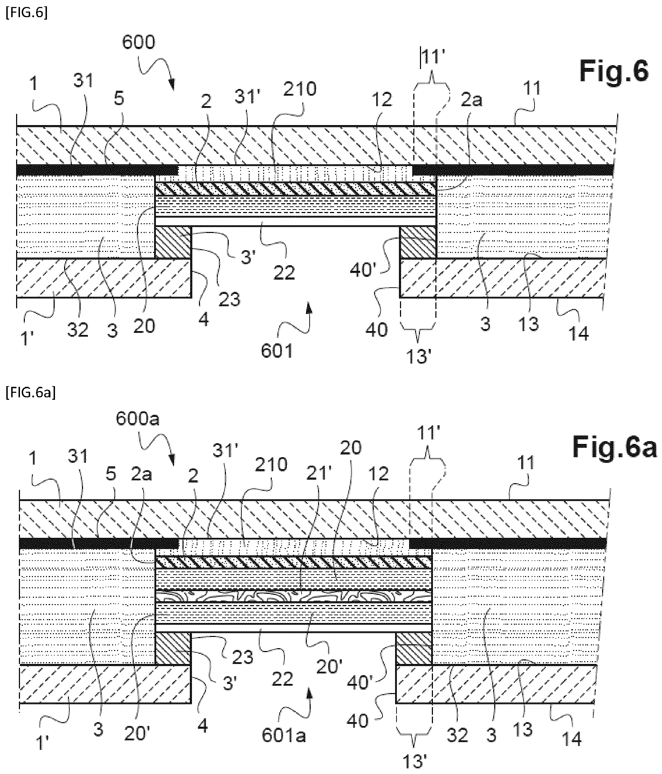

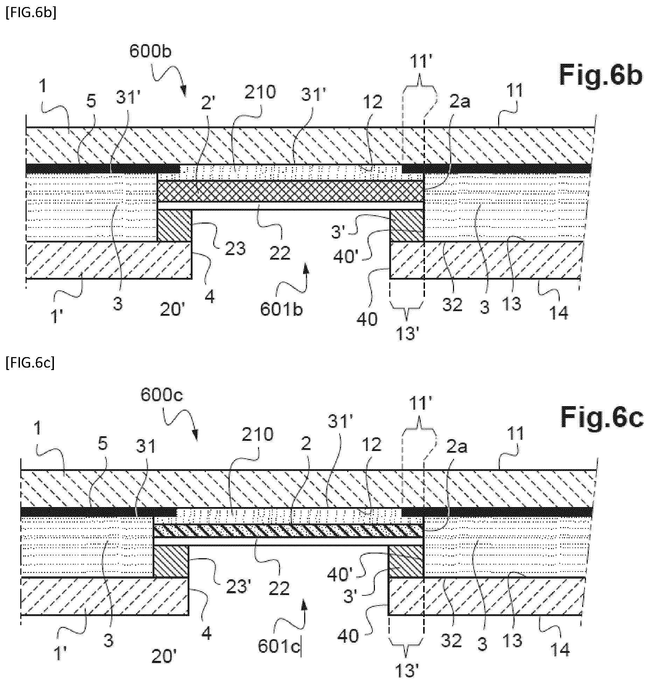

La figure 6 schématise en vue de coupe partielle et de détail autour du trou traversant d'un pare-brise 600 dans un sixième mode de réalisation de l'invention.
La figure 6a schématise en vue de coupe partielle et de détail autour du trou traversant d'un pare-brise 600a dans une première variante du sixième mode de réalisation de l'invention.
La figure 6b schématise en vue de coupe partielle et de détail autour du trou traversant d'un pare-brise 600b dans une deuxième variante du sixième mode de réalisation de l'invention.
La figure 6c schématise en vue de coupe partielle et de détail autour du trou traversant d'un pare-brise 600c dans une troisième variante du sixième mode de réalisation de l'invention.

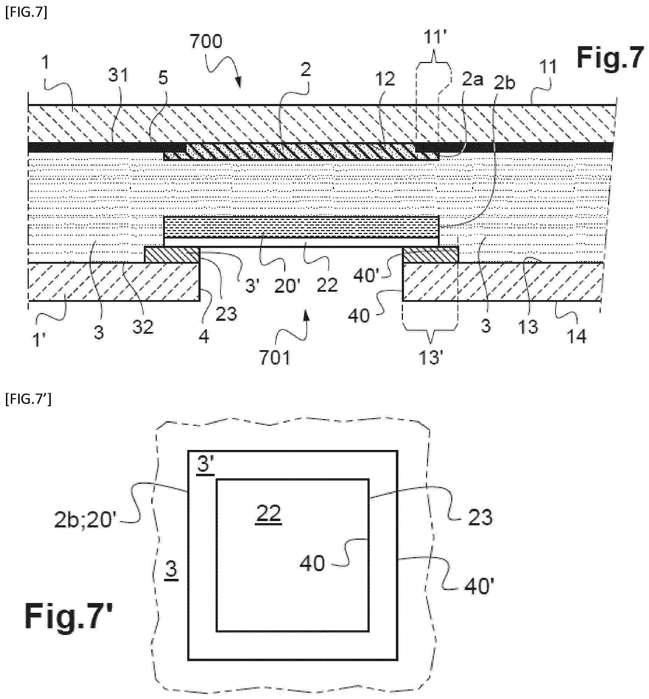

La figure 7 schématise en vue de coupe partielle et de détail autour du trou traversant d'un pare-brise 700 dans un septième mode de réalisation de l'invention.
La figure 7' une vue de face partielle du pare-brise (côté habitacle) de la figure 7.

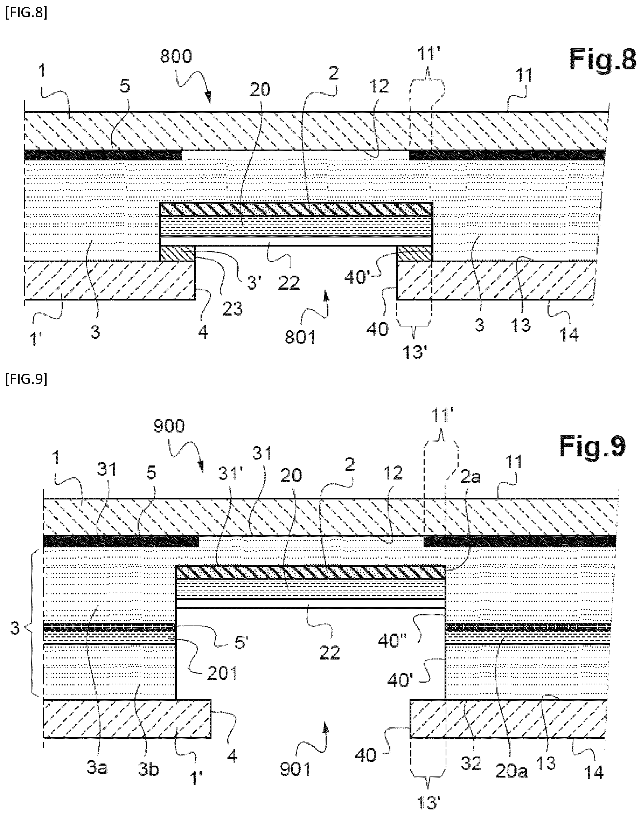

La figure 8 schématise en vue de coupe partielle et de détail autour du trou traversant d'un pare-brise 800 dans un huitième mode de réalisation de l'invention.

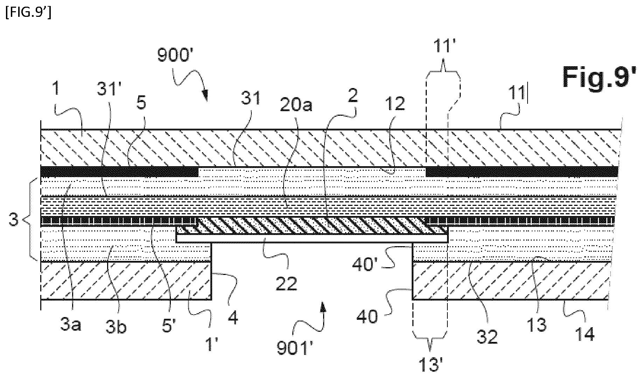

La figure 9 schématise en vue de coupe partielle et de détail autour du trou traversant d'un pare-brise 900 dans un neuvième mode de réalisation de l'invention.
La figure 9' schématise en vue de coupe partielle et de détail autour du trou traversant d'un pare-brise 900' dans une variante du neuvième mode de réalisation de l'invention.

Le figures ne sont pas à l'échelle.

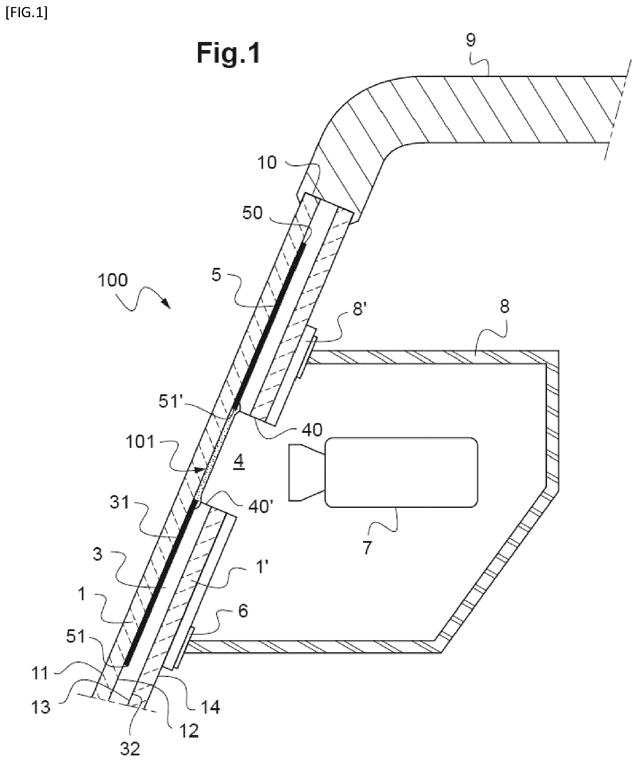

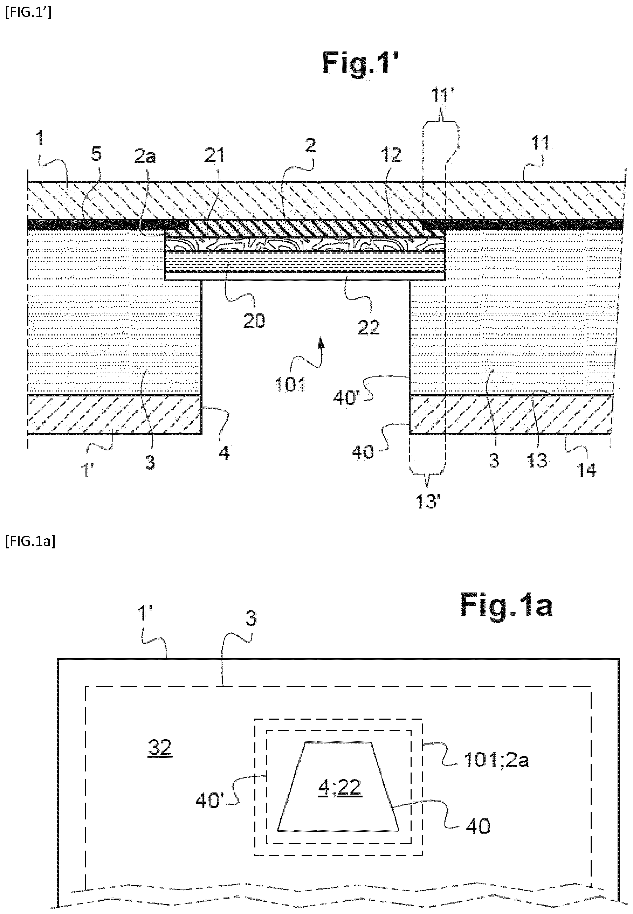

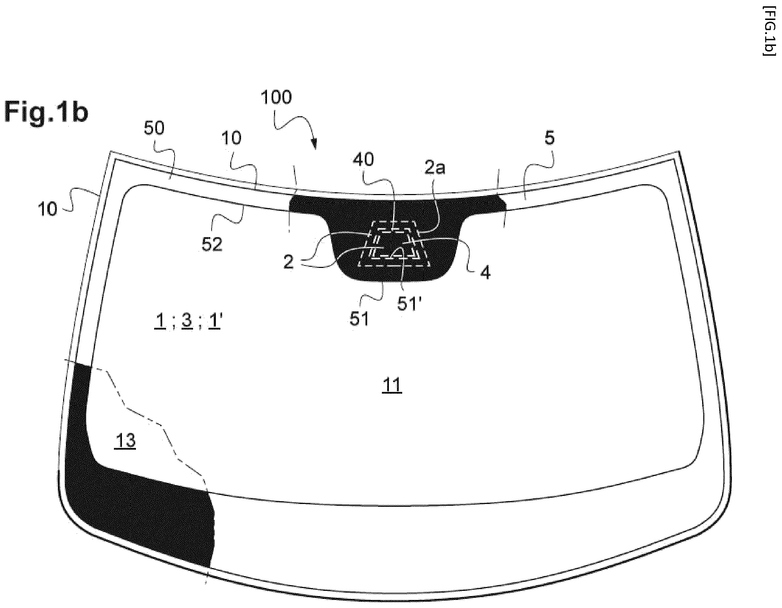

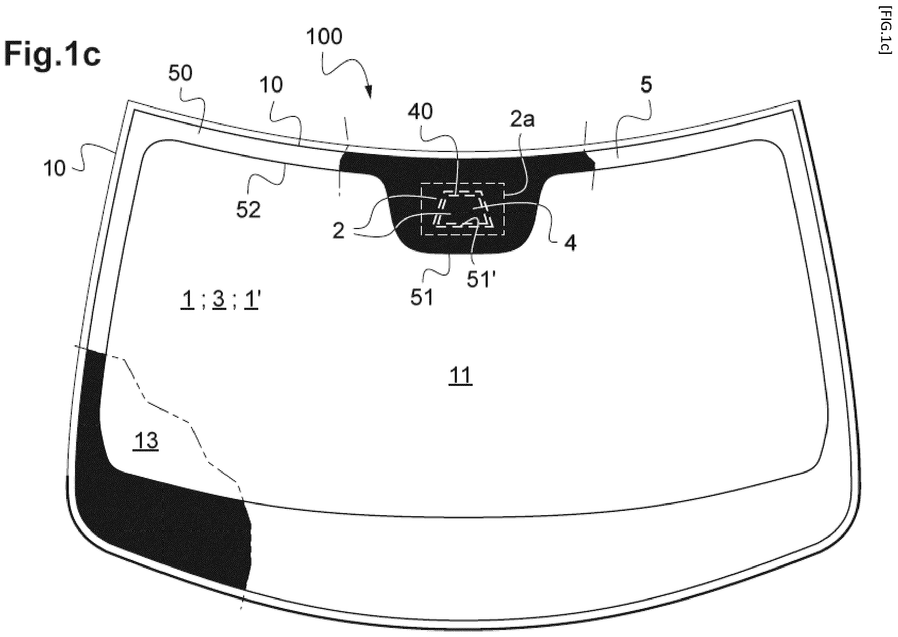

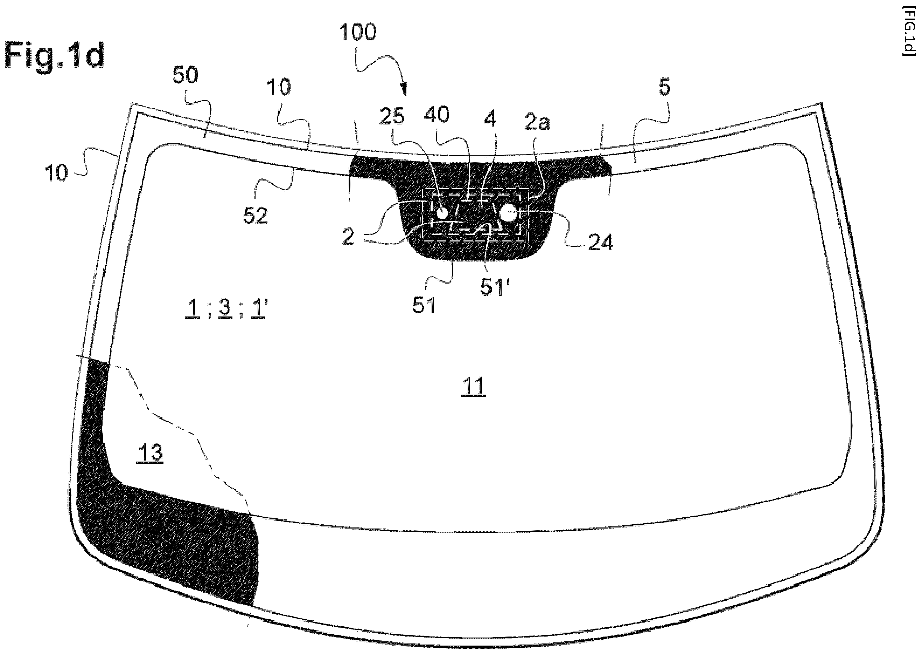

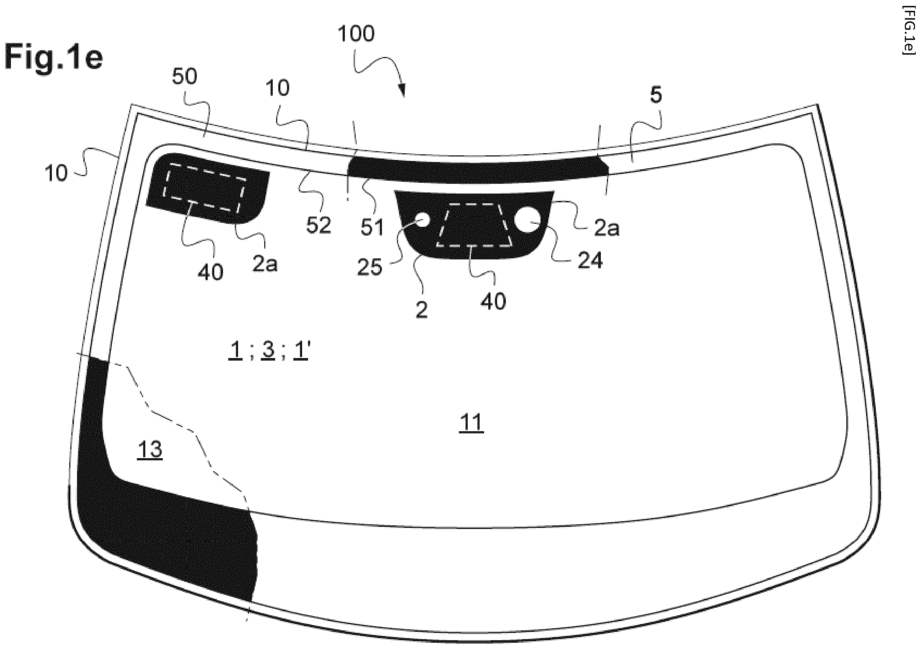

La figure 1 schématise un pare-brise 100 selon l'invention, en coupe avec un système de vision infrarouge 7 tel qu'un LIDAR à 850nm ou 905nm ou 1550nm. La figure 1' est une vue de détail de la figure 1 et la vue 1a une vue de face partielle du pare-brise de la figure 1. La figure 1' est une vue de détail de la figure 1. La figure 1a une vue de face partielle du pare-brise (côté habitacle) de la figure 1.

La figure 1b schématise en vue de face (côté extérieur) le pare-brise 100 de la figure 1. Ce système de vision 7 est placé derrière le pare-brise face à une zone qui se situe de préférence dans la partie centrale et supérieure du pare-brise. Dans cette zone, le système de vision infrarouge 7 est orienté avec un certain angle vis-à-vis de la surface du pare-brise (face F2). En particulier, le LIDAR peut être orienté directement vers la zone de saisie d'images, selon une direction parallèle ou proche de la parallèle au sol, c'est-à-dire légèrement inclinée vers la route.

Le pare-brise est un vitrage feuilleté comprenant :
- une feuille de verre externe 1, avec face extérieure dite F1 11 et face intérieure F2 dite 12
- et une feuille de verre interne 1' (ou en variante plastique), par exemple d'épaisseur ou même de 1,6mm ou même moins, avec face extérieure dite F3 13 et face intérieure dite F4 14 côté habitacle
- les deux feuilles de verre étant liées l'une à l'autre par un intercalaire en matière thermoplastique 3, le plus souvent en polyvinylbutyral (PVB) de préférence clair, d'épaisseur submillimétrique éventuellement présentant une section transversale diminuant en forme en coin du haut vers le bas du vitrage feuilleté, par exemple un PVB (RC41 de Solutia ou d'Eastman) d'épaisseur 0,76mm environ et/ou en variante si nécessaire un PVB acoustique (tricouche ou quadricouche) par exemple d'épaisseur 0,81mm environ, par exemple intercalaire en trois feuillets PVB ou encore tricouche PVB/PET fonctionnel (contrôle solaire etc)/PVB.

De façon classique et bien connue, le pare-brise est obtenu par feuilletage à chaud des éléments 1, 1' et 3.On choisit par exemple un PVB clair de 0,76mm. Si on conserve le PVB en face du trou traversant on le préfère le plus transparent à la longueur d'onde de travail).

La première feuille de verre 1 notamment à base de silice, sodocalcique, silicosodo calcique (de préférence), aluminosilicate, borosilicate, présente une teneur pondérale en oxyde de fer total (exprimé sous la forme Fe₂O₃) d'au plus 0,05% (500ppm), de préférence d'au plus 0,03% (300ppm) et d'au plus 0,015% (150ppm) et notamment supérieure ou égale à 0,005%. La première feuille de verre peut présenter un rédox supérieur ou égal à 0,15, et notamment compris entre 0,2 et 0,30, notamment entre 0,25 et 0,30.

On choisit notamment un verre OPTWHITE et de 1,95mm.

La deuxième feuille de verre 1' notamment à base de silice, sodocalcique, de préférence silicosodocalcique (et comme la première feuille de verre), voire aluminosilicate, ou borosilicate présente une teneur pondérale en oxyde de fer total d'au moins 0,4% et de préférence d'au plus 1,5%. La deuxième feuille de verre peut présenter un rédox entre 0,22 et 0,35 ou 0,30.

On peut citer notamment les verres de la Demanderesse dénommés TSAnx (0,5 à 0,6% de fer), TSA2+, TSA3+ (0,8 à 0,9% de fer), TSA4+ (1% de fer), TSA5+, par exemple verts. On choisit un verre TSA3+ de 1,6mm.

La première-feuille de verre comporte, sur la face F2 un empilement 101 transparent à au moins une longueur d'onde dite de travail dans l'infrarouge comprise entre 800nm à 1800nm, notamment entre 850nm et 1600nm, avec une surface libre (non recouverte par l'intercalaire de feuilletage et la deuxième feuille de verre ou plastique) au moyen d'un trou traversant 4 dans l'épaisseur de la deuxième feuille de verre ou plastique donc trou délimité par les parois 40 et ici d'un trou traversant optionnel dit intercalaire délimité par les parois 40'.

L'empilement 101 forme un élément de sécurité.

Selon l'invention, dans une région centrale périphérique le long du bord longitudinal supérieur, le pare-brise comporte donc un trou traversant 4 dans l'épaisseur de la deuxième feuille de verre ou plastique 1' et éventuellement de l'intercalaire de feuilletage 3. Le système de vision infrarouge 7 est en vis-à-vis du trou traversant 4.

Comme montré en figures 1a à 1e, le trou 4 est ici trou fermé (entouré par la paroi de la feuille de verre), donc au sein du vitrage notamment -de section trapézoïdale ou rectangulaire (figure 1e) comportant :
- un premier grand côté ou bord longitudinal dit supérieur le plus proche de la tranche du bord longitudinal supérieur du vitrage 10 - parallèle à cette tranche de longueur d'au plus 20cm par exemple 10,6cm et espacé d'au moins 5cm ou 6cm de la tranche
- un deuxième grand côté ou bord longitudinal dit inférieur (le plus éloigné de la tranche du bord longitudinal supérieur 10, proche de la zone centrale) parallèle au premier grand côté de longueur d'au plus 25cm ou 20cm par exemple 17,5cm et espacé d'au moins 5cm ou 6cm de la tranche
- de hauteur (entre les grands côtés) d'au moins 5cm ici de 10cm.

Le trou traversant peut être circulaire notamment s'il est de diamètre d'au plus 10cm, 8, 5, ou 2cm.

Le trou traversant 4 peut être alternativement une encoche donc un trou traversant débouchant de préférence côté toit.

Le trou traversant 4 peut être dans une autre région du pare-brise 100 (cf déporté vers un bord latéral 10 cf figure 1e qui présente deux zones possibles pour le trou 4), ou même dans un autre vitrage du véhicule en particulier la lunette arrière.

L'empilement 101 est également local. Ici il est de forme rectangulaire présent en face dudit trou 4 et dans une zone de bordure dudit trou par exemple ses bords dépassent au maximum de 10mm des parois délimitant le trou 4 entre la face F2 et F3.

Le pare-brise 100 comporte sur la face F2 12 une couche de masquage opaque par exemple noire 5, tel qu'une couche d'émail ou une laque, formant un cadre périphérique du parebrise (ou de la lunette) et dans la zone périphérique avec le trou traversant, ici zone centrale avec masquage plus étendu, il comporte une épargne 51' suffisamment grande pour ne pas gêner les performances du LIDAR 7 mais apte à masquer le boîtier 8 (plastique, métal, etc) du LIDAR 7.

Le boitier 8 et même le LIDAR peut être fixé (collé, etc) à une platine 8' trouée au droit dudit trou sur la face F4 par une colle 6 (et éventuellement au toit 9.

Ici, l'empilement 101 est sur la face F2 et recouvre un peu la couche de masquage 5 dans la zone de bordure du trou traversant 4 (zone 11') pour masquer ses bords. La couche de masquage a un bord haut 50 et un bord bas 51 dans la zone centrale. Le bord bas 52 de la couche de masquage 5 de part et d'autre de la zone centrale est plus proche de la tranche 10.

L'empilement 101 comporte en partant de la face 12 F2 :
- une couche colorante 2 formant un filtre sélectif pour camoufler le trou 4 de l'extérieur en comblant au moins l'épargne 51' et au-delà
- une colle PSA 21 par exemple acrylate, déposée par voie liquide (avec liner de protection retiré) d'épaisseur de 10µm
- un film PET transparent 20 avec un revêtement antireflet 22 à la longueur d'onde de travail.

On choisit par exemple un film AR dénommé DIAMOX AR1617 du fournisseur Diamondcoatings. On peut choisir aussi alternativement un film anti-casse tel que le film SolarGard dénommé Armorcoat 7Mil.

La couche colorante 2 est en un composé par exemple polymère comportant une matrice organique et un agent colorant de préférence organique dispersé dans ladite matrice ledit agent colorant absorbant la lumière située dans ledit domaine du visible et étant transparent à ladite longueur de travail.

L'agent colorant est choisi par exemple parmi le Sudan Black B^{®}ou la Nigrosine Solvent black 5, et de préférence est le Sudan Black B^{®}.

Le composé est choisi de préférence parmi des monomères, des oligomères, ou des polymères comprenant au moins une fonction méthacrylate, des époxydes, un vernis constitué de particules dispersées de PVB, latex, polyuréthane ou acrylate.

Pour l'efficacité du filtre sélectif en couche, on peut jouer sur l'épaisseur de couche ou sur le pourcentage massique d'agent colorant.

Le filtre sélectif (en couche) peut être moins de 100µm ou même 30µm (vernis etc). En face dudit trou traversant, le vitrage feuilleté présente :
- une transmission totale d'au moins 80%, 90%, ou 95% à la longueur d'onde de travail, mesurée à 90°
- une transmission totale d'au plus 10%, 5%, 1% ou 0,1% dans le visible.

Comme le montrent les figures 1b à 1e, en vue de l'extérieur il semble donc y avoir une couche noire (ou autre couleur) continue de masquage dans la zone rétroviseur (ou en bordure) et de part et d'autre dans la zone rétroviseur en forme d'une bande de masquage 50.

Le filtre sélectif est défini par un L*1, a*1 b*1, définie dans l'espace chromatique L*a*b* CIE 1976. La couche de masquage de couleur C1 aussi est définie par un L*2, a*2 b*2 avec un écart colorimétrique ΔE* donné par la formule suivante ΔE* = √ (ΔL^{*2} + Δa^{*2} + Δb^{*2}).

De préférence ΔE*<4, mieux ΔE*<2 (l'oeil humain discerne difficilement), encore mieux ΔE*<1 (l'oeil humain ne discerne pas).

L'empilement 101 peut avoir la même forme 2a que le trou 4 : trapézoïdale (figure 1b) ou rectangulaire (figure 1e premier cas en bordure, figure 1c et 1d) englobant le trou (trapézoïdal ou en variante non montré circulaire).

L'épargne 51' peut avoir la même forme que le trou 4 : trapézoïdale (figure 1b, 1c) ou rectangulaire (figure 1d) englobant le trou (trapézoïdale ou en variante non montré circulaire).

L'épargne 51' est montré fermée mais peut être débouchante et comblée par la couche colorante 2.

Dans la figure 1e, la couche de masquage 5 ne comporte pas d'épargne (ni même de surépaisseur pour former la zone caméra(s). La couche colorante 2 est à proximité de préférence faiblement espacée pour maintenir si nécessaire une continuité de masquage.

La zone de la couche colorante peut être suffisamment étendue au-delà dudit trou traversant pour servir dans une zone caméra comportant un ou des capteurs.

Dans ce cas comme montré en figure 1d et 1e pour un besoin de transparence dans le visible de ces capteurs, l'empilement 101 (ou au moins la couche 2) est « patternée » (structurée) donc présente par exemple une première ouverture 24 pour une caméra visible et une autre ouverture 25 plus petite pour la caméra thermique ou encore d'autres capteurs (pluie, luminosité extérieure etc).

Le pare-brise 100 peut comporter un ensemble de fils métalliques quasi invisibles, par exemple de 50µm qui sont mis en place par exemple sur la face FA ou FB de l'intercalaire de feuilletage 3 (sur toute la surface) en forme des lignes droites ou non. Ces fils peuvent être absents du trou traversant 4 s'ils nuisent au LIDAR.

Dans la vue de détail (figure 1') on voit que la face FA couvre la bordure de l'empilement sous la zone de bordure du trou traversant dans une zone 13'. Le trou traversant de l'intercalaire de feuilletage peut se réduire de quelques mm par fluage.

Pendant la fabrication si l'empilement 101 est mince par exemple d'au plus 0,2mm le PVB avec trou traversant (par exemple 0,38mm ou 0,76mm) est sur l'empilement et par fluage il vient en contact adhésif avec la face F2 et la tranche 2a de l'empilement (contact latéral).

La présence d'un film en face dudit trou traversant forme un élément de sécurité.

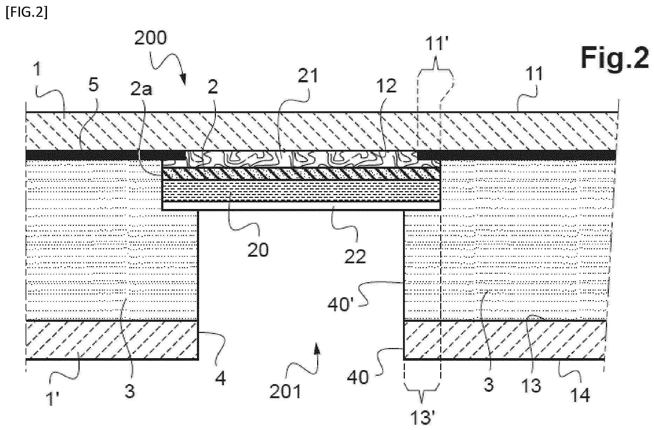

La figure 2 schématise en vue de coupe partielle et de détail autour du trou traversant d'un pare-brise 200 dans un deuxième mode de réalisation de l'invention.

L'empilement 201 diffère du précédent 101 en ce qu'il comporte un film sélectif c'est-à-dire un film transparent PET 20 porteur sur l'une au moins de ses faces principales ici orienté vers F2 de la couche colorante 2 déjà décrite.

Ce film sélectif est collé par une colle PSA acrylate 21 à la face F2.

La présence d'un film en face dudit trou traversant forme un élément de sécurité.

Sur la face opposée (orientée vers la face F3) le film Pet 20 de préférence comporte un revêtement AR 22 par exemple par alternance de couche haut et bas indice ou encore une couche poreuse notamment sol-gel de silice avec des particules creuses (de silice, etc).

Si l'empilement est assez mince (d'au plus 200µm par exemple) il ne crée pas de surépaisseur gênante au moment du feuilletage.

Si l'empilement est plus épais on peut recourir à un premier PVB avec un premier trou traversant et un deuxième PVB (plus mince notamment) avant un deuxième trou traversant moins large pour couvrir la bordure de l'AR 22 (sans dépasser notablement en face dudit trou traversant de la deuxième feuille.

La figure 3 schématise en vue de coupe partielle et de détail autour du trou traversant d'un pare-brise 300 dans un troisième mode de réalisation de l'invention.

La figure 3' schématise en vue de face (côté habitacle) le pare-brise 300 de la figure 3. L'empilement 301 diffère du précédent 201 en ce qu'il est plus épais par exemple le film 20 a une fonction anticasse renforcé et est épais d'au moins 300 ou 400µm.

Il diffère aussi de l'empilement précédent en ce qu'il est lié dans la zone de bordure du trou traversant non pas par le PVB mais par une bande arrière 3' par exemple mince inférieure à 0,2mm , avec une tranche coté trou traversant 23 par exemple du PVB sans plastifiant sur tout le pourtour du trou traversant et en contact adhésif par sa tranche interne avec le PVB 3 (interface discernable par exemple). La bande avant a par exemple un contour rectangulaire englobant le trou traversant trapézoïdal (ou circulaire).

On peut préassembler film sélectif/bande avant formation de la structure feuilletée

La figure 4 schématise en vue de coupe partielle et de détail autour du trou traversant d'un pare-brise 400 dans un quatrième mode de réalisation de l'invention. L'empilement 401 diffère de l'empilement 301 en ce qu'il comporte un empilement de films polymère collés à la face F2 12 et collés entre eux par un adhésif PSA 21,21':
- le premier film est sélectif
- le deuxième film est un film AR 20', 22

Alternativement on choisit un film anticasse et un film (filtre) sélectif.

Alternativement on choisit un film anticasse et un film AR.

Un exemple de film anti-casse est le film SolarGard dénommé Armorcoat 7Mil.

Le PVB a une face principale FA 31 côté F2 12 et FB 32 côté F3 13.

La figure 5 schématise en vue de coupe partielle et de détail autour du trou traversant d'un pare-brise 500 dans un cinquième mode de réalisation de l'invention.

L'empilement 501 diffère de l'empilement 201 en ce que le premier film est sélectif en étant teinté en masse. On peut souhaiter conserver la couche colorante si besoin.

Alternativement on utilise une bande arrière comme pour l'empilement précédent 401.

La figure 6 schématise en vue de coupe partielle et de détail autour du trou traversant d'un pare-brise 600 dans un sixième mode de réalisation de l'invention.

L'empilement 601 diffère de l'empilement 201 en ce que le premier film sélectif est collé à la face F2 par une bande avant 210 par exemple mince inférieure à 0,2mm par exemple du PVB sans plastifiant. La bande avant a une face 31' en contact adhésif avec la face 12.

On peut choisir le même (type) de PVB pour bande avant et arrière 3'.

La figure 6a schématise en vue de coupe partielle et de détail autour du trou traversant d'un pare-brise 600a dans une première variante du sixième mode de réalisation de l'invention.

L'empilement 601a diffère de l'empilement 601 en ce qu'il comporte deux films collés par une colle PSA 21' : le film sélectif 20 puis le film AR 20', 22.

La figure 6b schématise en vue de coupe partielle et de détail autour du trou traversant d'un pare-brise 600b dans une deuxième variante du sixième mode de réalisation de l'invention.

L'empilement 601b diffère de l'empilement 601 en ce qu'il comporte un film sélectif teinté en masse 2' toujours avec le revêtement antireflet 22 et la bande avant 210.

La figure 6c schématise en vue de coupe partielle et de détail autour du trou traversant d'un pare-brise 600c dans une troisième variante du sixième mode de réalisation de l'invention.

L'empilement 601c diffère de l'empilement 601 en ce qu'il comporte un film avec revêtement AR 22 avec sur la face côté face F2 12 la couche colorante 2.

La figure 7 schématise en vue de coupe partielle et de détail autour du trou traversant d'un pare-brise 700 dans un septième mode de réalisation de l'invention.

La figure 7' une vue de face partielle du pare-brise (côté habitacle) de la figure 7. L'intercalaire PVB 3 est conservé dans la zone sous ledit trou traversant. Dans cette zone et en bordure, la face FA 31 est en contact avec la couche colorante 2 déposée sur la face F2 12 ou sur la face FA (encre). Dans cette zone et en bordure la face FB 32 est en contact adhésif avec un film AR 22 porteur d'une bande arrière 3' avec une tranche 23 et en contact adhésif avec la face F3 13 et éventuellement dépassant de la tranche 2b du du film 20'.

On peut remplacer la couche colorante 2 par un film sélectif ou même un empilement de films collés entre eux (incluant le film sélectif). Et si nécessaire on peut pratiquer un trou borgne sur la face FA pour éviter une surépaisseur causée par le ou le films.

La figure 8 schématise en vue de coupe partielle et de détail autour du trou traversant d'un pare-brise 800 dans un huitième mode de réalisation de l'invention.

L'empilement 801 diffère de l'empilement 701 en ce que la couche colorante 2 est déplacée côté face FB sous le film 20. La bande arrière n'est pas dépassante.

La figure 9 schématise en vue de coupe partielle et de détail autour du trou traversant d'un pare-brise 900 dans un neuvième mode de réalisation de l'invention.

L'empilement 901 est le même que l'empilement 801 mais le PVB est un tri couche PVB1 3b avec une tranche 40' coté trou du verre et la face 32/PET fonctionnel 20a avec une couche de contrôle solaire 5'/PVB2 3a avec une tranche 40" coté trou du verre et la face 31, PVB tri couche troué au droit dudit trou traversant et sa bordure côté face FB et en deçà du PET 20.

On pourrait rajouter pour plus de solidité une bande arrière.

La figure 9' schématise en vue de coupe partielle et de détail autour du trou traversant d'un pare-brise 900' dans une variante du neuvième mode de réalisation de l'invention. Le parebrise 900' diffère du 900 en ce que seul le PVB2 3b et la couche de contrôle solaire 5' (côté face FB) est omise en face dudit trou traversant. Le PVB2 a été troué puis assemblé avec le Pet 20a déjà porteur de la couche sélective 2 et d'une surcouche AR 22.

Le trou borgne est alternativement réalisé côté FA pour loger un film ou un empilement de film et sur la face FB on conserve au moins un film polymère de protection du PVB.

## Revendications

1. Vitrage feuilleté de véhicule (100 à 900'), notamment routier ou ferroviaire, en particulier pare-brise, lunette arrière, en particulier bombé, d'épaisseur donnée, comportant :
- une première feuille de verre (1) destinée à être le vitrage extérieur avec une première face principale externe F1 (11) et une deuxième face principale interne F2 (12)
- un intercalaire de feuilletage (3) en matière polymère avec une face principale FA orientée vers F2 et avec une face principale FB opposée à FA, d'épaisseur E3 donnée
- une deuxième feuille de verre ou plastique (1') destinée à être le vitrage intérieur avec une troisième face principale F3 (13) côté F2 et une quatrième face principale interne F4 (14)
**caractérisé en ce que**
- la première feuille de verre présente une teneur pondérale en oxyde de fer total d'au plus 0,05%
- la deuxième feuille présente un trou traversant dans l'épaisseur, de largeur W1 au moins centimétrique
- le vitrage comporte sous ledit trou traversant, du côté de la face F2, un élément de sécurité transparent à au moins une longueur d'onde dite de travail dans l'infrarouge dans une gamme allant de 800nm à 1800nm, notamment 850±5nm et/ou 905±5nm et/ou 1550±5nm,
l'élément de sécurité comporte :
en configuration a), un premier film polymère ou un premier empilement de films polymère comportant un premier film polymère et au moins un deuxième film polymère collé au premier film polymère, l'élément de sécurité présente une épaisseur totale de film(s) polymère E'3 d'au moins 50µm et de préférence d'au plus 800µm, le premier film polymère étant collé à la face F2 nue ou revêtue d'un revêtement fonctionnel,
l'intercalaire de feuilletage présentant un trou traversant dit trou intercalaire, dans l'épaisseur, en face dudit trou traversant de la deuxième feuille.
ou
en configuration b), un deuxième empilement comportant l'intercalaire de feuilletage (3) et au moins un premier autre film polymère collé ou en contact adhésif avec la face FB nue ou revêtue d'un revêtement fonctionnel,
et **en ce qu'**en face dudit trou traversant de la deuxième feuille, le vitrage feuilleté présente une transmission totale d'au moins 80%, 90%, ou 95% à la longueur d'onde de travail.

2. Vitrage de véhicule selon la revendication 1, **caractérisé en ce que** l'élément de sécurité (101 à 901') s'étend dans une zone de bordure dudit trou traversant sur au moins 2mm.

3. Vitrage de véhicule selon l'une des revendications précédentes, **caractérisé en ce que** le deuxième empilement selon b), ou le premier film polymère ou encore le premier empilement selon a) est lié à la face F3 dans une zone de bordure dudit trou traversant de la deuxième feuille sur au moins 2mm.

4. Vitrage de véhicule (100 à 900) selon la revendication précédente, **caractérisé en ce que** dans le cas a) le premier film polymère ou le premier empilement est collé par un adhésif notamment sensible à la pression PSA ou thermofusible et/ou le premier film polymère est lié par une bande locale polymère dit bande arrière ou le premier empilement comporte une bande locale polymère dit bande arrière, bande arrière en contact adhésif avec la face F3 nue ou revêtue d'un revêtement,
dans le cas b) le deuxième empilement comporte une bande locale polymère dite bande arrière en contact adhésif avec la face F3 nue ou revêtue d'un revêtement.

5. Vitrage de véhicule selon la revendication précédente, **caractérisé en ce que** sous la face F3, la bande arrière notamment à base de poly(vinyl butyral) (PVB) est en contact adhésif avec l'intercalaire de feuilletage.

6. Vitrage de véhicule (100, 200) selon l'une des revendications 4 ou 5, **caractérisé en ce que** la bande arrière est à base (en) poly(vinyl butyral) (PVB) contenant moins de 15% en poids de plastifiants, et en particulier sans plastifiant, et notamment l'intercalaire de feuilletage est à base en poly(vinyl butyral) (PVB) avec plastifiant, notamment avec plus de 15% en poids de plastifiants.

7. Vitrage de véhicule selon l'une des revendications précédentes, **caractérisé en ce que** la configuration a) ou b) comporte l'un au moins des films polymères fonctionnels transparents à la longueur d'onde de travail suivants, notamment polyester, PET: film filtre sélectif, film de sécurité ou anticasse, film chauffant, film antireflets ou AR, éventuellement plusieurs desdits films étant collés par un adhésif, .

8. Vitrage de véhicule selon l'une des revendications précédentes, **caractérisé en ce qu'**il comprend sous ledit trou traversant de la deuxième feuille, du côté de la face F2, un filtre sélectif, absorbant dans le visible et transparent à au moins une longueur d'onde dite de travail dans l'infrarouge dans une gamme allant de 800nm à 1800nm, notamment 850±5nm, 905±5nm et/ou 1550±5nm, en face dudit trou traversant de la deuxième feuille, le vitrage feuilleté présente une transmission totale d'au plus 10%, 5%, 1% ou 0,1% dans le visible.

9. Vitrage de véhicule (100, 200) selon la revendication précédente, **caractérisé en ce que** le premier film ou le premier autre film polymère ou tout autre film polymère d'empilement a) ou b) fait partie du filtre sélectif ou formant ledit filtre sélectif.

10. Vitrage de véhicule (100, 200) selon l'une des revendications précédentes, **caractérisé en ce que** le premier ou deuxième empilement comporte un film polymère antireflet ou AR formant surface libre en face dudit trou traversant de la deuxième feuille.

11. Vitrage de véhicule (100, 200) selon l'une des revendications précédentes, **caractérisé en ce qu'**au moins un film polymère de l'élément de sécurité selon a) ou b) comporte au moins deux fonctions, de préférence par au moins un revêtement fonctionnel, choisies parmi les suivantes : filtre sélectif, chauffante, antireflet, anticasse.

12. Vitrage de véhicule (100, 200) selon l'une des revendications précédentes, **caractérisé en ce que** pour a) le revêtement fonctionnel est sur la face F2, et est un filtre sélectif ou une couche chauffante, le premier film ou premier autre film est un film AR, le premier ou deuxième empilement comprend en dernier film AR ou un revêtement AR.

13. Vitrage de véhicule (100, 200) selon l'une des revendications précédentes, **caractérisé en ce que** pour a) le premier film notamment polyester, notamment PET est collé à la face F2 par
- une couche d'adhésion de préférence qui est un adhésif sensible à la pression PSA ou thermofusible
ou
- une bande locale polymère dite bande avant, en contact adhésif avec la face F2 en face dudit trou traversant de la deuxième feuille, de préférence à base de poly(vinyl butyral) (PVB) d'épaisseur submillimétrique, la bande avant est de préférence en contact adhésif avec l'intercalaire de feuilletage.

14. Vitrage de véhicule (100, 200) selon l'une des revendications 5 à 13 **caractérisé en ce que** la bande avant et/ou arrière est à base (en) poly(vinyl butyral) (PVB) contenant moins de 15% en poids de plastifiants, et en particulier sans plastifiant, et notamment l'intercalaire de feuilletage est à base en poly(vinyl butyral) (PVB) avec plastifiant, notamment avec plus de 15% en poids de plastifiants.

15. Vitrage de véhicule selon l'une des revendications précédentes, **caractérisé en ce qu'**il comporte dans le trou traversant un insert, notamment en matière polymère.

16. Véhicule notamment autonome ou semi autonome incorporant le vitrage de véhicule selon l'une des revendications précédentes, notamment formant un pare-brise.

17. Dispositif, notamment véhicule, **caractérisé en ce qu'**il comprend :
- ledit vitrage (100 à 900') selon l'une des revendications précédentes de vitrage
- un système de vision infrarouge à ladite longueur d'onde de travail (7), disposé dans l'habitacle derrière ledit vitrage de façon à envoyer et/ou recevoir un rayonnement après traversée de la première feuille de verre au niveau dudit trou traversant.

## Patentansprüche

1. Kraftfahrzeugverbundverglasung (100 bis 900'), insbesondere für ein Straßen- oder Eisenbahnfahrzeug, im Besonderen eine Windschutzscheibe, eine Heckscheibe, im Besonderen gewölbt, mit gegebener Dicke, die vorweist:
- eine erste Glasscheibe (1), die dazu bestimmt ist, die Außenverglasung zu sein, mit einer ersten äußeren Hauptfläche F1 (11) und einer zweiten inneren Hauptfläche F2 (12)
- eine Verbundzwischenlage (3) aus Polymermaterial mit einer Hauptfläche FA, die F2 zugewandt ist, und mit einer Hauptfläche FB, die FA gegenüberliegt, mit gegebener Dicke E3
- eine zweite Glas- oder Plastikscheibe (1'), die dazu bestimmt ist, die Innenverglasung zu sein, mit einer dritten Hauptfläche F3 (13) auf der Seite von F2 und einer vierten inneren Hauptfläche F4 (14)
**dadurch gekennzeichnet, dass**
- die erste Glasscheibe einen Gewichtsgehalt an Gesamteisenoxid von höchstens 0,05 % aufweist
- die zweite Scheibe ein Durchgangsloch in der Dicke, mit Breite W1, mindestens im Zentimeterbereich aufweist
- die Verglasung unter dem Durchgangsloch, auf der Seite der Fläche F2, ein Sicherheitselement vorweist, das bei mindestens einer sogenannten Arbeitswellenlänge im Infrarotbereich in einem Bereich von 800 nm bis 1800 nm, insbesondere 850±5 nm und/oder 905±5 nm und/oder 1550±5 nm, transparent ist,
das Sicherheitselement vorweist:
in Konfiguration a), eine erste Polymerfolie oder einen ersten Stapel von Polymerfolien mit einer ersten Polymerfolie und mindestens einer zweiten Polymerfolie, die mit der ersten Polymerfolie verklebt ist, wobei das Sicherheitselement eine Gesamtdicke der Polymerfolie(n) E'3 von mindestens 50 µm und vorzugsweise von höchstens 800 µm aufweist, wobei die erste Polymerfolie mit der blanken oder mit einer funktionellen Beschichtung beschichteten Fläche F2 verklebt ist, wobei die Verbundzwischenlage ein Durchgangsloch, Zwischenlageloch genannt, in der Dicke gegenüber dem Durchgangsloch der zweiten Scheibe aufweist.
oder
in Konfiguration b), einen zweiten Stapel, der die Verbundzwischenlage (3) und mindestens eine erste weitere Polymerfolie vorweist, die mit der blanken oder mit einer funktionellen Beschichtung beschichteten Fläche FB verklebt oder in Haftkontakt ist,
**und dadurch, dass**, gegenüber dem Durchgangsloch der zweiten Folie, die Verbundverglasung eine Gesamttransmission von mindestens 80 %, 90 % oder 95 % bei der Arbeitswellenlänge aufweist.

2. Fahrzeugverglasung nach Anspruch 1, **dadurch gekennzeichnet, dass** sich das Sicherheitselement (101 bis 901') in einer Randzone des Durchgangslochs über mindestens 2 mm erstreckt.

3. Fahrzeugverglasung nach einem der vorstehenden Ansprüche, **dadurch gekennzeichnet, dass** der zweite Stapel nach b) oder die erste Polymerfolie oder auch der erste Stapel nach a) mit der Fläche F3 in einer Randzone des Durchgangslochs der zweiten Scheibe über mindestens 2 mm verbunden ist.

4. Fahrzeugverglasung (100 bis 900) nach dem vorstehenden Anspruch, **dadurch gekennzeichnet, dass** im Fall a) die erste Polymerfolie oder der erste Stapel durch einen Klebstoff, insbesondere einen Haftklebstoff PSA oder Schmelzklebstoff, verklebt ist und/oder die erste Polymerfolie durch ein lokales Polymerband, hinteres Band genannt, verbunden ist oder der erste Stapel ein lokales Polymerband, hinteres Band genannt, vorweist, wobei das hintere Band in Haftkontakt mit der blanken oder mit einer Beschichtung beschichteten Fläche F3 steht,
im Fall b) der zweite Stapel ein lokales Polymerband, hinteres Band genannt, in Haftkontakt mit der blanken oder mit einer Beschichtung beschichteten Fläche F3, vorweist.

5. Fahrzeugverglasung nach dem vorstehenden Anspruch,
**dadurch gekennzeichnet, dass** unter der Fläche F3 das hintere Band, insbesondere auf Basis von Poly(vinylbutyral) (PVB), in Haftkontakt mit der Verbundzwischenlage steht.

6. Fahrzeugverglasung (100, 200) nach einem der Ansprüche 4 oder 5, **dadurch gekennzeichnet, dass** das hintere Band auf Polyvinylbutyral (PVB) basiert, das weniger als zu 15 Gew.-% Weichmacher enthält, und im Besonderen ohne Weichmacher, und insbesondere die Verbundzwischenlage auf Polyvinylbutyral (PVB) mit Weichmacher basiert, insbesondere mit mehr als zu 15 Gew.-% Weichmachern.

7. Fahrzeugverglasung nach einem der vorstehenden Ansprüche, **dadurch gekennzeichnet, dass** die Konfiguration a) oder b) mindestens eine der folgenden funktionellen Polymerfolien, die bei der Arbeitswellenlänge transparent sind, insbesondere Polyester, PET, vorweist: selektive Filterfolie, Sicherheits- oder Bruchsicherungsfolie, Heizfolie, Antireflex- oder AR-Folie, wobei gegebenenfalls mehrere der Folien durch ein Haftmittel verklebt sind.

8. Fahrzeugverglasung nach einem der vorstehenden Ansprüche**,**
**dadurch gekennzeichnet, dass** sie unter dem Durchgangsloch der zweiten Scheibe, auf der Seite der Fläche F2, einen selektiven Filter umfasst, der im sichtbaren Bereich absorbiert und für mindestens eine sogenannte Arbeitswellenlänge im Infrarotbereich in einem Bereich von 800 nm bis 1800 nm, insbesondere 850±5 nm, 905±5 nm und/oder 1550±5 nm, transparent ist, wobei, gegenüber dem Durchgangsloch der zweiten Scheibe, die Verbundverglasung eine Gesamttransmission von höchstens 10 %, 5 %, 1 % oder 0,1 % im sichtbaren Bereich aufweist.

9. Fahrzeugverglasung (100, 200) nach dem vorstehenden Anspruch, **dadurch gekennzeichnet, dass** die erste Folie oder die erste andere Polymerfolie oder jede andere Polymerfolie des Stapels a) oder b) Teil des selektiven Filters ist oder den selektiven Filter ausbildet.

10. Fahrzeugverglasung (100, 200) nach einem der vorstehenden Ansprüche, **dadurch gekennzeichnet, dass** der erste oder zweite Stapel eine Antireflex- oder AR-Polymerfolie vorweist, die eine freie Oberfläche gegenüber dem Durchgangsloch der zweiten Scheibe ausbildet.

11. Fahrzeugverglasung (100, 200) nach einem der vorstehenden Ansprüche, **dadurch gekennzeichnet, dass** mindestens eine Polymerfolie des Sicherheitselements nach a) oder b) mindestens zwei Funktionen vorweist, vorzugsweise durch mindestens eine funktionelle Beschichtung, die aus den folgenden ausgewählt sind: selektiver Filter, Heizfunktion, Antireflexion, Bruchsicherung.

12. Fahrzeugverglasung (100, 200) nach einem der vorstehenden Ansprüche, **dadurch gekennzeichnet, dass** für a) die funktionelle Beschichtung auf der Fläche F2 ist und ein selektiver Filter oder eine Heizschicht ist, die erste Folie oder erste andere Folie eine AR-Folie ist, der erste oder zweite Stapel als letzte Folie eine AR-Folie oder eine AR-Beschichtung umfasst.

13. Fahrzeugverglasung (100, 200) nach einem der vorstehenden Ansprüche, **dadurch gekennzeichnet, dass** für a) die erste Folie, insbesondere Polyester, insbesondere PET, mit der Fläche F2 verklebt ist durch
- eine Haftschicht, die vorzugsweise ein Haftklebstoff PSA oder Schmelzklebstoff ist
oder
- ein lokales Polymerband, vorderes Band genannt, in Haftkontakt mit der Fläche F2 gegenüber dem Durchgangsloch der zweiten Folie, vorzugsweise auf Basis von Poly(vinylbutyral) (PVB) mit einer Dicke im Submillimeterbereich, wobei das vordere Band vorzugsweise in Haftkontakt mit der Verbundzwischenlage steht.

14. Fahrzeugverglasung (100, 200) nach einem der Ansprüche 5 bis 13, **dadurch gekennzeichnet, dass** das vordere und/oder hintere Band auf Polyvinylbutyral (PVB) basiert, das weniger als zu 15 Gew.-% Weichmacher enthält, und im Besonderen ohne Weichmacher, und insbesondere die Verbundzwischenlage auf Polyvinylbutyral (PVB) mit Weichmacher basiert, insbesondere mit mehr als zu 15 Gew.-% Weichmachern.

15. Fahrzeugverglasung nach einem der vorstehenden Ansprüche, **dadurch gekennzeichnet, dass** sie in dem Durchgangsloch einen Einsatz vorweist, insbesondere aus Polymermaterial.

16. Fahrzeug, insbesondere ein autonomes oder halbautonomes, das die Fahrzeugverglasung nach einem der vorstehenden Ansprüche einschließt, die insbesondere eine Windschutzscheibe ausbildet.

17. Vorrichtung, insbesondere für ein Fahrzeug,
**dadurch gekennzeichnet, dass** sie umfasst:
- die Verglasung (100 bis 900') nach einem der vorstehenden Ansprüche für eine Verglasung
- ein System für Infrarotsicht bei der Arbeitswellenlänge (7), das in dem Fahrzeuginnenraum hinter der Verglasung angeordnet ist, um Strahlung zu senden und/oder zu empfangen, nachdem die erste Glasscheibe an dem Durchgangsloch durchdrungen wurde.

## Claims

1. A laminated glazing for a vehicle (100 to 900'), in particular a road or rail vehicle, especially a windshield or a back window, especially bent, of given thickness, comprising:
- a first glass sheet (1) intended to be the exterior glazing with a first external main face F1 (11) and a second internal main face F2 (12)
- a lamination interlayer (3) made of polymer material with a main face FA oriented toward F2 and with a main face FB opposite to FA, of given thickness E3
- a second glass or plastic sheet (1') intended to be the interior glazing with a third main face F3 (13), F2 side, and a fourth internal main face F4 (14)
**characterized in that**:
- the first glass sheet exhibits a content by weight of total iron oxide of at most 0.05%,
- the second sheet exhibits a traversing hole in the thickness, with a width W1 which is at least centimetric,
- the glazing comprises, under said traversing hole, on the side of the face F2, a safety element which is transparent at at least one "working" wavelength in the infrared region in a range extending from 800 nm to 1800 nm, in particular 850 ± 5 nm and/or 905 ± 5 nm and/or 1550 ± 5 nm,
the safety element comprises:
in configuration a), a first polymer film or a first stack of polymer films comprising a first polymer film and at least one second polymer film adhesively bonded to the first polymer film, the safety element exhibits a total thickness of polymer film(s) E'3 of at least 50 µm and preferably of at most 800 µm, the first polymer film being adhesively bonded to the face F2 which is bare or coated with a functional coating, the lamination interlayer exhibiting a traversing hole, "interlayer hole", in the thickness, opposite said traversing hole of the second sheet,
or
in configuration b), a second stack comprising the lamination interlayer (3) and at least one first other polymer film adhesively bonded or in adhesive contact with the face FB which is bare or coated with a functional coating,
and **in that**, opposite said traversing hole of the second sheet, the laminated glazing exhibits a total transmission of at least 80%, 90% or 95% at the working wavelength.

2. The vehicle glazing as claimed in claim 1, **characterized in that** the safety element (101 to 901') extends into a border zone of said traversing hole over at least 2 mm.

3. The vehicle glazing as claimed in either of the preceding claims, **characterized in that** the second stack according to b), or the first polymer film or also the first stack according to a), is bonded to the face F3 in a border zone of said traversing hole of the second sheet over at least 2 mm.

4. The vehicle glazing (100 to 900) as claimed in the preceding claim, **characterized in that**, in the case a), the first polymer film or the first stack is adhesively bonded by an adhesive, in particular a pressure-sensitive adhesive PSA or hot-melt adhesive, and/or the first polymer film is bonded by a polymer local band, "rear band", or the first stack comprises a polymer local band, "rear band", rear band in adhesive contact with the face F3 which is bare or coated with a coating,
in the case b), the second stack comprises a polymer local band, "rear band", in adhesive contact with the face F3 which is bare or coated with a coating.

5. The vehicle glazing as claimed in the preceding claim, **characterized in that**, under the face F3, the rear band, in particular based on poly(vinyl butyral) (PVB), is in adhesive contact with the lamination interlayer.

6. The vehicle glazing (100, 200) as claimed in either of claims 4 and 5, **characterized in that** the rear band is based (made of) poly(vinyl butyral) (PVB) containing less than 15% by weight of plasticizers, and especially without plasticizer, and in particular the lamination interlayer is based made of poly(vinyl butyral) (PVB) with plasticizer, in particular with more than 15% by weight of plasticizers.

7. The vehicle glazing as claimed in one of the preceding claims, **characterized in that** the configuration a) or b) comprises one at least of the following functional polymer films transparent at the working wavelength, in particular polyester or PET films: selective filter film, safety or breakage-prevention film, heating film, antireflective or AR film, optionally several of said films being adhesively bonded by an adhesive.

8. The vehicle glazing as claimed in one of the preceding claims, **characterized in that** it comprises, under said traversing hole of the second sheet, on the side of the face F2, a selective filter which absorbs in the visible region and is transparent at at least one "working" wavelength in the infrared region in a range extending from 800 nm to 1800 nm, in particular 850 ± 5 nm, 905 ± 5 nm and/or 1550 ± 5 nm, opposite said traversing hole of the second sheet, the laminated glazing exhibits a total transmission of at most 10%, 5%, 1% or 0.1% in the visible region.

9. The vehicle glazing (100, 200) as claimed in the preceding claim, **characterized in that** the first film or the first other polymer film or any other polymer film of stack a) or b) forms part of the selective filter or forming said selective filter.

10. The vehicle glazing (100, 200) as claimed in one of the preceding claims, **characterized in that** the first or second stack comprises an antireflection or AR polymer film forming a free surface opposite said traversing hole of the second sheet.

11. The vehicle glazing (100, 200) as claimed in one of the preceding claims, **characterized in that** at least one polymer film of the safety element according to a) or b) comprises at least two functions, preferably by at least one functional coating, chosen from the following: selective filter, heating, antireflective, breakage-prevention.

12. The vehicle glazing (100, 200) as claimed in one of the preceding claims, **characterized in that**, for a), the functional coating is on the face F2 and is a selective filter or a heating layer, the first film or first other film is an AR film, the first or second stack comprises lastly an AR film or an AR coating.

13. The vehicle glazing (100, 200) as claimed in one of the preceding claims, **characterized in that**, for a), the first film, in particular polyester film, in particular PET film, is adhesively bonded to the face F2 by
- an adhesion layer, which is preferably a pressure-sensitive adhesive PSA or hot-melt adhesive
or
- a polymer local band, "front band", in adhesive contact with the face F2 opposite said traversing hole of the second sheet, preferably based on poly(vinyl butyral) (PVB) of submillimetric thickness, the front band is preferably in adhesive contact with the lamination interlayer.

14. The vehicle glazing (100, 200) as claimed in one of claims 5 to 13, **characterized in that** the front and/or rear band is based (made of) poly(vinyl butyral) (PVB) containing less than 15% by weight of plasticizers, and especially without plasticizer, and in particular the lamination interlayer is based or made of poly(vinyl butyral) (PVB) with plasticizer, in particular with more than 15% by weight of plasticizers.

15. The vehicle glazing as claimed in one of the preceding claims, **characterized in that** it comprises, in the traversing hole, an insert, in particular made of polymer material.

16. A vehicle, in particular an autonomous or semiautonomous vehicle, incorporating the vehicle glazing as claimed in one of the preceding claims, in particular forming a

17. A device, in particular vehicle, **characterized in that** it comprises:
- said glazing (100 to 900') as claimed in one of the preceding glazing claims
- a system for infrared viewing at said working wavelength (7), positioned in the passenger compartment behind said glazing so as to send and/or receive radiation after passing through the first glass sheet at the level of said traversing hole.
